# EUROPEAN PATENT APPLICATION

(11) **EP 4 293 295 A1**
(43) Date of publication of application: **20.12.2023**
(21) Application number: 22752973.2
(22) Date of filing: 09.02.2022
(51) Int. Cl.: F24H 7/02, F24H 9/1818, H05B 3/03, F28D 20/00

(54) **ELECTRODE-BASED HEATING DEVICE**

(30) Priority: 09.02.2021 KR 20210018523
(71) Applicant: NEW ENERGY Co., Ltd, Busan , 46904 (KR)
(72) Inventor: KIM, Young Tae, Busan 48472 (KR); KIM, No Eul, Yangsan-si Gyeongsangnam-do 50607 (KR)
(74) Representative: AWA Sweden AB
(86) International application number: PCT/KR2022/001963
(87) International publication number: WO 2022/173213

(57) **Abstract**

An embodiment of the present disclosure discloses an electrode-based heating device for heating a fluid, the electrode-based heating device including a body part and a heating unit part, wherein the body part is formed such that the fluid is arranged inside the body part, the heating unit part includes a plurality of heating units spaced apart from each other, at least one heating unit of the plurality of heating units is formed such that electrolyzed water is arranged inside the at least one heating unit, and includes an electrode part formed to heat the electrolyzed water, and the fluid and the electrolyzed water are arranged to overlap each other.

## Description

### TECHNICAL FIELD

The present disclosure relates to an electrode-based heating device.

### BACKGROUND ART

As technology advances, products to which various technologies are applied in the field of machinery, electronics, and the like are being developed and produced, and accordingly, various heating systems, for example, boiler systems, are being developed.

Boilers may be largely classified into industrial boilers, agricultural boilers, and household boilers. In addition, the types of boilers may be classified as a direct heating method or an indirect heating method in which a medium such as water is heated and circulated.

In addition, according to the types of energy sources of the boilers, as specific examples, boilers using petroleum, boilers using briquettes or the like, boilers using wood, boilers using gas, boilers using electricity, and the like are being used or studied.

Among them, boilers using electricity to provide the heat source may have advantages in terms of emissions and environmental problems compared to boilers using fossil fuels such as petroleum or coal.

However, there is a limitation in implementing a heating device using electricity while easily securing thermal efficiency and electrical stability of the heating device.

### DESCRIPTION OF EMBODIMENTS

### TECHNICAL PROBLEM

The present disclosure may provide an electrode-based heating device that may increase the use convenience of a user by improving electrical stability and thermal efficiency.

### SOLUTION TO PROBLEM

An embodiment of the present disclosure discloses an electrode-based heating device for heating a fluid, the electrode-based heating device including a body part and a heating unit part, wherein the body part is formed such that the fluid is arranged inside the body part, the heating unit part includes a plurality of heating units spaced apart from each other, at least one heating unit of the plurality of heating units is formed such that electrolyzed water is arranged inside the at least one heating unit, and includes an electrode part formed to heat the electrolyzed water, and the fluid and the electrolyzed water are arranged to overlap each other.

In the present embodiment, the plurality of heating units of the heating unit part may be arranged to be spaced apart from each other in a direction crossing a lengthwise direction of the plurality of heating units.

In the present embodiment, the electrode-based heating device may further include an inlet through which the fluid is introduced into the body part, and an outlet through which the fluid is discharged to an outside of the body part.

In the present embodiment, the fluid may be arranged to overlap an electrode part of each of the plurality of heating units of the heating unit part.

Other aspects, features, and advantages other than those described above will become apparent from the following drawings, claims, and detailed description of the disclosure.

### ADVANTAGEOUS EFFECTS OF DISCLOSURE

An electrode-based heating device according to the present disclosure may increase the use convenience of a user by improving electrical stability and thermal efficiency.

### BRIEF DESCRIPTION OF DRAWINGS

FIG. 1 is a schematic diagram illustrating an electrode-based heating device according to an embodiment of the present disclosure.
FIG. 2 is an exemplary enlarged view of portion A of FIG. 1.
FIG. 3 is a cross-sectional view taken along line III-III of FIG. 1.
FIGS. 4 to 7 are cross-sectional views schematically illustrating various modifications of a heating unit, according to an embodiment of the present disclosure.
FIG. 8 is a schematic diagram illustrating an electrode-based heating device according to another embodiment of the present disclosure.
FIG. 9 is a diagram schematically illustrating an optional embodiment of a heating unit, according to an embodiment of the present disclosure.
FIG. 10 is a schematic diagram illustrating an electrode-based heating device according to another embodiment of the present disclosure.
FIG. 11 is a schematic diagram illustrating an electrode-based heating device according to another embodiment of the present disclosure.
FIG. 12 is a diagram schematically illustrating an optional embodiment of a heating unit of FIG. 11.
FIG. 13 is an exemplary diagram for describing the flow of a fluid of the electrode-based heating device of FIG. 11.
FIG. 14 is a schematic diagram illustrating an electrode-based heating device according to another embodiment of the present disclosure.
FIG. 15 is a diagram schematically illustrating an optional embodiment of a heating unit of FIG. 14.
FIG. 16 is an example of a cross-sectional view taken along line XVI-XVI of FIG. 15.
FIG. 17 is a perspective view schematically illustrating an optional embodiment of the heating unit of FIG. 14.
FIG. 18 is a perspective view schematically illustrating an optional embodiment of the heating unit of FIG. 14.
FIG. 19 is an exemplary diagram for describing the flow of a fluid in the electrode-based heating device of FIG. 14.
FIG. 20 is a cross-sectional view taken along line XIX-XIX of FIG. 14.
FIG. 21 is a schematic diagram illustrating an electrode-based heating device according to another embodiment of the present disclosure.
FIG. 22 is a cross-sectional view taken along line X X I -X X I of FIG. 21.
FIG. 23 is a cross-sectional view taken along line X X II- X X II of FIG. 21.
FIG. 24 is a cross-sectional view taken along line X X III-X XIII of FIG. 21.
FIG. 25 is a cross-sectional view taken along line X XIV-X XIV of FIG. 21.
FIGS. 26 to 28 are exemplary diagrams for describing a configuration of an electrode-based heating device, according to another embodiment of the present disclosure.
FIG. 29 is a schematic plan view illustrating an electrode-based heating device according to another embodiment of the present disclosure.
FIG. 30 is a schematic plan view illustrating a state in which a top module of the electrode-based heating device of FIG. 29 is removed.

### MODE OF DISCLOSURE

Hereinafter, configurations, and operations of the present disclosure will be described in detail with reference to embodiments of the present disclosure illustrated in the accompanying drawings.

As the present disclosure allows for various changes and numerous embodiments, particular embodiments will be illustrated in the drawings and described in detail. Advantages and features of the present disclosure and a method of achieving the same should become clear with embodiments described below in detail with reference to the drawings. However, the present disclosure is not limited to the embodiments disclosed below, but may be implemented in various forms.

Hereinafter, embodiments of the present disclosure will be described below in detail with reference to the accompanying drawings, and when the embodiments of the present disclosure are described with reference to the drawings, the same or corresponding components are given the same reference numerals, and repetitive descriptions thereof will be omitted.

In the following embodiments, terms such as "first," "second," etc., are used only to distinguish one component from another, and such components must not be limited by these terms.

In the following embodiments, the singular expression also includes the plural meaning as long as it is not inconsistent with the context.

In the following embodiments, the terms "comprises," "includes," "has", and the like used herein specify the presence of stated features or components, but do not preclude the presence or addition of one or more other features or components.

For convenience of description, the magnitude of components in the drawings may be exaggerated or reduced. For example, since the size and thickness of each component illustrated in the drawing are arbitrarily shown for convenience of description, the present disclosure is not necessarily limited to those illustrated in the drawing.

In the following embodiments, the x-axis, y-axis, and z-axis are not limited to three axes on a Cartesian coordinate system, and may be interpreted in a broad sense including them. For example, the x-axis, the y-axis, and the z-axis may be orthogonal to each other, but may refer to different directions that are not orthogonal to each other.

In a case in which a particular embodiment is realized otherwise, a particular process may be performed out of the order described. For example, two processes, which are successively described herein, may be substantially simultaneously performed, or may be performed in a process sequence opposite to a described process sequence.

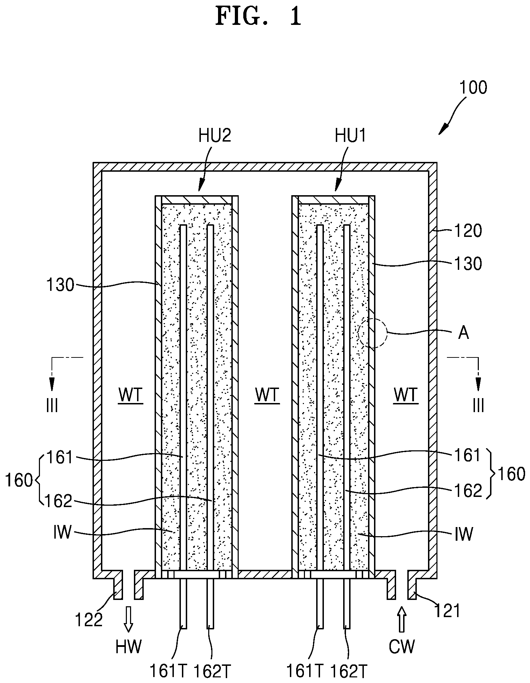

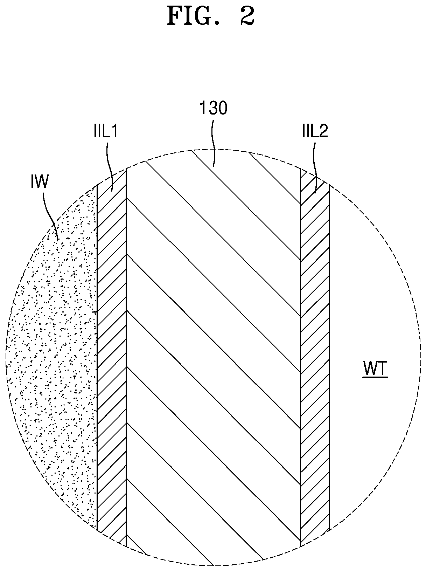

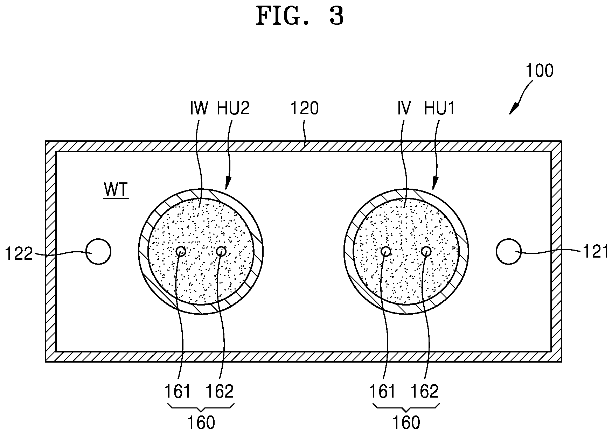

FIG. 1 is a schematic diagram illustrating an electrode-based heating device according to an embodiment of the present disclosure, FIG. 2 is an exemplary enlarged view of portion A of FIG. 1, and FIG. 3 is a cross-sectional view taken along line III-III of FIG. 1.

Referring to FIGS. 1 to 3, an electrode-based heating device 100 of the present embodiment may include a body part 120 and a heating unit part HU.

A fluid WT may be arranged inside the body part 120. The fluid WT may be of various types, and may include, for example, a liquid or a gas.

In an optional embodiment, the fluid WT may include water, and for example, the electrode-based heating device 100 may employ a method of using hot water.

The body part 120 may have various shapes, for example, may have a hollow box shape.

In an optional embodiment, the body part 120 may have a pillar shape, for example, a shape similar to a cylinder, as another example, a quadrangular pillar shape, as still another example, a pillar shape including a curved surface similar to an ellipse.

In an optional embodiment, the body part 120 may be formed to be longer than heating unit parts HU1 and HU2.

For example, the fluid WT inside the body part 120 may correspond to side surfaces of the heating unit parts HU1 and HU2, and as a specific example, may be arranged to surround the side surfaces.

In addition, the fluid WT may be arranged between the first heating unit HU1 and the second heating unit HU2 of the heating unit part HU.

Through such a configuration of the body part 120, the fluid WT in the body part 120 may be easily heated through the heating unit HU.

The body part 120 may have various shapes, and may include at least an inlet 121 for inflowing the fluid WT and an outlet 122 for discharging the fluid WT.

Specifically, an unheated fluid CW before heating, which is introduced via the inlet 121, may be introduced, and for example, the unheated fluid CW may include room-temperature or low-temperature water.

A heated fluid HW, for example, heated water, may be discharged via the outlet 122.

As a specific example, the unheated fluid CW including room-temperature water, which is introduced via the inlet 121, may be introduced into the body part 120 and then heated through a heating unit part HU, and the heated fluid HW including the heated water may be discharged via the outlet 122.

In an optional embodiment, the inlet 121 and the outlet 122 may be arranged on both sides with the heating unit part HU therebetween. Through this, as the fluid WT introduced through the inlet 121 sequentially passes through spaces adjacent to the first heating unit HU1 and the second heating unit HU2 of the heating unit part HU, heating efficiency may be improved.

The body part 120 may be formed of various materials. For example, the body part 120 may be formed of a durable and lightweight insulating material. In an optional embodiment, the body part 120 may be formed of a plastic material including various types of resins. In another optional embodiment, the body part 120 may include an inorganic material such as ceramic.

In addition, in another optional embodiment, the body part 120 may be formed of a metal material.

As another example, the body part 120 may include a Teflon resin that is a fluorine resin.

In an optional embodiment, from among surfaces of the body part 120, at least an inner surface of the body part 120 adjacent to the fluid WT may include an insulating layer, may include, for example, an inorganic layer, and may contain an inorganic material including ceramic.

In addition, as another example, an insulating layer containing an organic material may be formed on an inner surface of the body part 120 adjacent to the fluid WT.

Through this, it is possible to improve safety in use of the electrode-based heating device 100 by improving mutual insulation characteristics with the heating unit part HU.

The heating unit part HU may include at least a plurality of heating units HU1 and HU2, and may include, for example, the first heating unit HU1 and the second heating unit HU2.

In an optional embodiment, the first heating unit HU1 and the second heating unit HU2 may be arranged to be spaced apart from each other.

Electrolyzed water IW may be arranged inside the first heating unit HU1. The electrolyzed water IW may be arranged to be distinguished from the external fluid WT.

For example, the electrolyzed water IW may be arranged inside a heat dissipation part 130 of the first heating unit HU1, such that the electrolyzed water IW and the fluid WT may be distinguished from each other through the heat dissipation part 130. The heat dissipation part 130 will be described in more detail below.

The electrolyzed water IW may be of various types. For example, the electrolyzed water IW may include an electrolyte solution, specifically, distilled water, filtered water, bottled water, tap water, or the like in which at least one of various types of electrolyte solutions is appropriately diluted.

As an electrolyte material included in the electrolyzed water IW, there are various types including rust inhibitors or the like that contain edible soda; an inorganic material, such as nitrites, phosphate, silicate, or polyphosphate; amines; oxyacids, or the like as main components.

The first heating unit HU1 may have a form in which the entry and exit of the electrolyzed water IW is controlled, may be formed such that the electrolyzed water IW does not flow out after filling the inside of the first heating unit HU1, and as another example, may include a replenishing inlet (not shown) for replenishing or discharging the electrolyzed water IW.

Meanwhile, a region of the first heating unit HU1 in contact with the electrolyzed water IW may be formed of various materials, and may be formed of a durable and lightweight insulating material. In addition, in another optional embodiment, the region may be formed of a metal material.

In an optional embodiment, the region of the first heating unit HU1 in contact with the electrolyzed water IW may include an insulating layer, for example, an inorganic layer, and may contain an inorganic material including ceramic.

As another example, the region of the first heating unit HU1 in contact with the electrolyzed water IW may include a Teflon resin layer, which is a fluorine resin.

The first heating unit HU1 may include an electrode part 160 having one or more electrodes.

At least one region of the electrode part 160 may be arranged inside the first heating unit HU1, for example, inside the heat dissipation part 130.

In addition, the electrode part 160 may be arranged to overlap the electrolyzed water IW to heat the electrolyzed water IW in an inner region of the heat dissipation part 130.

In addition, the electrode part 160 may overlap the fluid WT arranged inside the body part 120 in one direction.

The electrode part 160 may include a plurality of electrodes.

For example, the electrode part 160 may include a first electrode 161 and a second electrode 162.

As a specific example, each of the first electrode 161 and the second electrode 162 may be formed to be in contact with the electrolyzed water IW. Although not illustrated, the first electrode 161 and the second electrode 162 may receive a current applied by an electrode control part (not shown), and the control part (not shown) may control the current.

In an optional embodiment, the first electrode 161 and the second electrode 162 may include a first terminal part 161T and a second terminal part 162T, respectively, and a power source may be connected through the first terminal part 161T and the second terminal part 162T.

The electrolyzed water IW may be heated by a current applied to the first electrode 161 and the second electrode 162 of the electrode part 160. Heat generated by heating the electrolyzed water IW may be transferred to the fluid WT of the body part 120 to heat the fluid WT.

The first electrode 161 and the second electrode 162 may have be spaced apart from each other at an interval in an inner space of the first heating unit HU1.

For example, the first electrode 161 and the second electrode 162 may have shapes elongated while being spaced apart from each other at an interval in an inner space of the heat dissipation part 130 of the first heating unit HU1, and may each have a linear shape.

One end extending from each of the first electrode 161 and the second electrode 162 may be spaced apart from a region of the heat dissipation part 130, as a specific example, an inner surface thereof. As a specific example, ends respectively opposite to the first terminal part 161T and the second terminal part 162T may be formed to be spaced apart from the inner surface of the heat dissipation part 130.

Through this, it is possible to stably heat the electrolyzed water IW while reducing the occurrence of electrical leakage or short circuit within the heat dissipation part 130.

In addition, a conductive part (not shown) connected to one region of each of the first electrode 161 and the second electrode 162, for example, the first terminal part 161T and the second terminal part 162T, may be included such that a current is applied to the first electrode 161 and the second electrode 162, and the conductive part (not shown) may be a wire-type conductive line and may be connected to the electrode control part (not shown).

In another optional embodiment, the electrode part 160 may also include three electrodes in a three-phase form.

In an optional embodiment, a temperature sensing member (not shown) may be further arranged to measure the temperature of the electrolyzed water IW inside the heat dissipation part 130. In addition, a cooling part (not shown) may also be arranged to control overheating of the temperature sensing member (not shown).

A control part (not shown) may be formed to control the current applied to the electrode part 160. The current applied to each of the first electrode 161 and the second electrode 162 of the electrode part 160 may be controlled through the control part (not shown), and in an optional embodiment, the current may be controlled in real time.

Here, the control part (not shown) may check the amount of current applied to the electrode part 160 and perform current control by increasing or decreasing the amount of current according to a set value, such that a rapid change in the temperature of the electrolyzed water IW may be reduced.

The control part (not shown) may have various shapes to facilitate a change in current. For example, the control part (not shown) may include various types of switches, and may include a non-contact relay such as a solid-state relay (SSR) for sensitive and rapid control.

The heat dissipation part 130 of the first heating unit HU1 may be arranged to distinguish between the electrolyzed water IW and the fluid WT. For example, the heat dissipation part 130 may be located between the electrolyzed water IW and the fluid WT. In addition, the heat dissipation part 130 may be formed to be spaced apart from the electrode part 160.

For example, the heat dissipation part 130 may have a shape elongated to have a length in the same direction as the lengthwise direction of the body part 120, as a specific example, one end of the heat dissipation part 130 may be spaced apart from the inner surface of the body part 120, and the fluid WT may be arranged in the space between the heat dissipation part 130 and the inner surface of the body part 120.

One side of the heat dissipation part 130 may be connected to the body part 120. The first and second terminal parts 161T and 162T of the electrode part 160 may be easily extended in a direction in which the end of the heat dissipation part 130 is connected to the body part 120.

In an optional embodiment, the heat dissipation part 130 may include a bottom surface, and the bottom surface may be in close contact with one side of the body part 120.

In an optional embodiment, the heat dissipation part 130 may have a hollow pillar shape. For example, the heat dissipation part 130 may have a curved outer surface, and as a specific example, may have a shape similar to a cylinder. Through this, heat transfer efficiency to the fluid WT may be improved by increasing the contact surface between the heat dissipation part 130 and the fluid WT. In addition, as the heat dissipation part 130 has the curved outer surface in contact with the fluid WT, the fluid WT may move smoothly along the outer surface of the heat dissipation part 130 in the inner space of the body part 120, such that an effect of heating uniformity of the fluid WT may be increased.

In an optional embodiment, the heat dissipation part 130 may be in contact with the electrolyzed water IW.

In an optional embodiment, the heat dissipation part 130 may be in contact with the fluid WT.

The heat dissipation part 130 may be formed of a material having high thermal conductivity, and may be formed to include, for example, a metal material. Heat of the electrolyzed water IW may be easily transferred to the fluid WT through the heat dissipation part 130.

As a specific example, the heat dissipation part 130 may include iron, aluminum, stainless steel, or other alloys.

In addition, in an optional embodiment, the heat dissipation part 130 may include an insulating layer (not shown) on one side facing the electrolyzed water IW, and as another example, may include an insulating layer (not shown) on one side facing the fluid WT. This may reduce or prevent a current from flowing through the heat dissipation part 130 from the electrolyzed water IW.

The heat dissipation part 130 may be formed to surround a region where the electrolyzed water IW is arranged, and thus to surround an outside of the region where the electrolyzed water IW is arranged.

In addition, the fluid WT may be arranged to surround the heat dissipation part 130 from the outside of the heat dissipation part 130.

FIG. 2 is an exemplary enlarged view of portion A of FIG. 1.

In an optional embodiment, referring to FIG. 2, the heat dissipation part 130 may include a first insulating layer IIL1 on a side surface facing the electrolyzed water IW and a second insulating layer IIL2 on a side surface facing the fluid WT.

In addition, in an optional embodiment, the heat dissipation part 130 may include only the first insulating layer IIL1 on at least the side surface facing the electrolyzed water IW.

The first insulating layer IIL1 or the second insulating layer IIL2 may include an inorganic layer, such as a ceramic material or the like.

As another example, the first insulating layer IIL1 or the second insulating layer IIL2 may include an organic layer such as a resin layer, and as a specific example, may include an insulating Teflon layer.

The first insulating layer IIL1 may reduce the current flowing to the heat dissipation part 130 through the electrolyzed water IW, and may reduce or prevent the flow of the leaked current from remaining in the body part 120 or the fluid WT. Furthermore, when leakage current components remain in the heat dissipation part 130, the first insulating layer IIL1 may reduce or prevent the leakage current components from flowing to the fluid WT, thereby reducing the occurrence of an electrical accident that may occur during the flow of the fluid WT.

The electrolyzed water IW may be arranged inside the second heating unit HU2. The electrolyzed water IW may be arranged to be distinguished from the external fluid WT.

For example, the electrolyzed water IW may be arranged inside the heat dissipation part 130 of the second heating unit HU2.

The second heating unit HU2 may include the electrode part 160 having one or more electrodes. The electrode part 160 may include a plurality of electrodes.

For example, the electrode part 160 may include the first electrode 161 and the second electrode 162.

The electrolyzed water IW, the heat dissipation part 130 and the electrode part 160 of the second heating unit HU2 may be the same as the configuration of the first heating unit HU1 described above, and as another example, may be applied with selective modifications of some of the components of the first heating unit HU1 as needed, and thus, more detailed descriptions thereof will be omitted.

The electrode-based heating device of the present embodiment may include a heating unit having a fluid arranged inside the body part and including a plurality of heating units arranged such that at least one region thereof overlaps the fluid. For example, although the heating unit is described as including two heating units, three or more heating units may be included as needed.

The plurality of heating units may be arranged to be spaced apart from each other and the fluid overlaps outer surfaces of the plurality of heating units such that the fluid may be easily heated by the heating units. In addition, the fluid may be arranged between the plurality of heating units, such that the heating efficiency of the fluid may be improved.

As a specific example, the plurality of heating units may be arranged to be spaced apart from each other between a region where the fluid is introduced into the body part and a region where the fluid is discharged, such that the fluid may be heated while flowing along a side surface of each of the plurality of heating units and through spaces between the side surfaces after being introduced into the body part, and thus, the heating rate of the fluid and the uniformity of heating of the fluid in the body part may be effectively increased.

Meanwhile, each heating unit of the heating unit part may heat the electrolyzed water by controlling the current applied to the electrodes of the electrode part, and the heat of the electrolyzed water may be transferred to the fluid through the heat dissipation part to heat the fluid. Through this, the heat of the electrolyzed water may be safely transferred to the fluid.

In addition, in an optional embodiment, the fluid is arranged to surround the outer surface of each heating unit inside the body part such that the fluid may easily move along the outer surface of the heating unit inside the body part, and as a specific example, the outer surface of the heating unit includes a curved surface such that a smooth flow of the fluid may be easily realized.

A circulation flow of the fluid heated from the introduced unheated fluid may proceed smoothly, such that the overall efficiency of the electrode-based heating device may be improved and user convenience may be improved. For example, hot water may be easily supplied to a user.

In addition, from among side surfaces of the heat dissipation part, the side surface facing the electrolyzed water includes an insulating layer, for example, an inorganic insulating layer such as ceramic, such that the flow of current or the flow of leakage current from the electrolyzed water to the heat dissipation part may be reduced or prevented. In addition, the user's use safety may be increased.

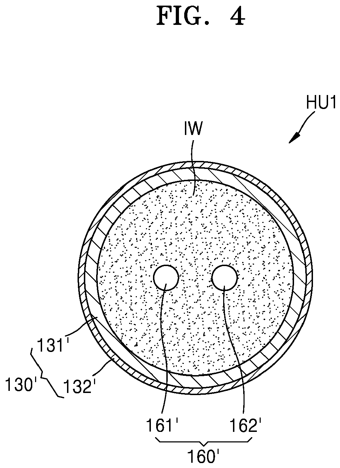

FIGS. 4 to 7 are cross-sectional views schematically illustrating various modifications of a heating unit, according to an embodiment of the present disclosure.

FIGS. 4 to 7 illustrate the first heating unit HU1, but this is for convenience of description, and optionally, the configurations of FIGS. 4 to 7 may be selectively applied to one or all of the first heating unit HU1 and the second heating unit HU2.

Referring to FIG. 4, in a modification, a heat dissipation part 130' of the first heating unit HU1 may include a first insulating layer 131' and a heat dissipation member 132', and specifically, the first insulating layer 131' may be arranged on a side surface facing the electrolyzed water IW, and the heat dissipation member 132' may be formed on the first insulating layer 131'.

Although not illustrated, a second insulating layer (not shown) may be formed on a side surface facing the fluid WT, for example, on the heat dissipation member 132'.

The heat dissipation member 132' may be formed of a material having high thermal conductivity, and may be formed to include, for example, a metal material. As a specific example, the heat dissipation member 132' may include iron, aluminum, stainless steel, or other alloys.

Through this structure, heat of the electrolyzed water IW heated through a first electrode 161' and a second electrode 162' of the electrode part 160' may be effectively transferred to the heat dissipation part 130', and heat transfer efficiency from the heat dissipation part 130' to the fluid may be improved. In addition, abnormal leakage of a current through the heat dissipation part 130' may be blocked.

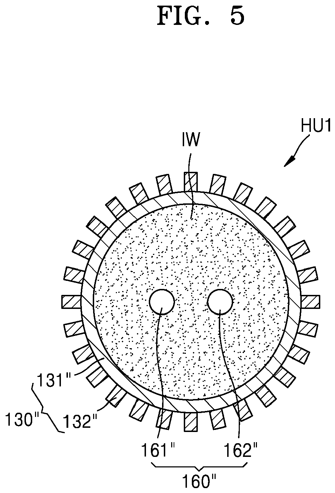

Referring to FIG. 5, in a modification, a heat dissipation part 130" of the first heating unit HU1 may include a base 131" and a heat dissipation protrusion 132".

The base 131" may be formed in a shape surrounding the electrolyzed water IW, and may have, for example, a shape similar to a cylinder. In addition, the base 131" may be formed to face an electrode part 160".

A plurality of heat dissipation protrusions 132" may be provided, may be connected to the base 131", and may protrude from the base 131" toward the fluid.

Heat transfer efficiency from the heat dissipation part 130" to the fluid may be improved through the plurality of heat dissipation protrusions 132".

In an optional embodiment, the plurality of heat dissipation protrusions 132" may each have a shape extending in one direction and may have regions spaced apart from each other.

In an optional embodiment, each of the plurality of heat dissipation protrusions 132" may have a shape elongated in the lengthwise direction of the heat dissipation part 130", and may have a length in a direction parallel to the lengthwise direction of the heat dissipation part 130", for example, the lengthwise direction of the base 131".

In addition, as another example, each of the plurality of heat dissipation protrusions 132" may have a length in a direction not parallel to the lengthwise direction of the base 131" but forming an acute angle or an obtuse angle with the lengthwise direction of the base 131".

In addition, as another example, each of the plurality of heat dissipation protrusions 132" may be formed to form a curve with respect to the lengthwise direction of the base 131".

The heat dissipation part 130" may be formed of a material having high thermal conductivity, and may be formed to include, for example, a metal material. Heat of the electrolyzed water IW may be easily transferred to the fluid WT through the heat dissipation part 130".

As a specific example, the heat dissipation part 130" may include iron, aluminum, stainless steel, or other alloys.

In addition, in an optional embodiment, the heat dissipation part 130" may include an insulating layer (not shown) on one side facing the electrolyzed water IW, and as another example, may include an insulating layer (not shown) on one side facing the fluid WT. This may reduce or prevent current from flowing through the heat dissipation part 130" from the electrolyzed water IW.

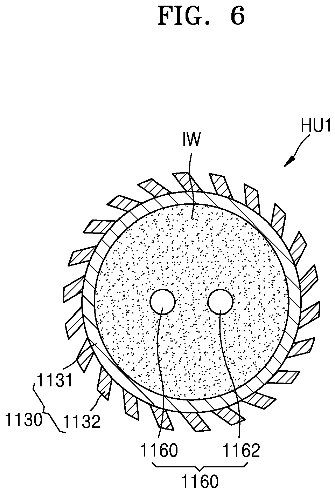

Referring to FIG. 6, in a modification, a heat dissipation part 1130 of the first heating unit HU1 may include a base 1131 and a heat dissipation protrusion 1132.

The base 1131 may be formed in a shape surrounding a region where an electrode part 1160 is arranged, and may have, for example, a shape similar to a cylinder. In addition, the base 1131 may have a shape surrounding the electrolyzed water IW.

A plurality of heat dissipation protrusions 1132 may be provided, may be connected to the base 1131, and may protrude from the base 1131 toward the fluid.

Each of the plurality of heat dissipation protrusions 1132 may have an inclined shape with respect to the outer circumferential surface of the base 1131. For example, each of the plurality of heat dissipation protrusions 1132 may be formed to have an acute angle or an obtuse angle with respect to the outer circumferential surface of the base 1131.

In addition, as a specific example, each of the plurality of heat dissipation protrusions 1132 may have a shape inclined in the same direction when inclined with respect to the outer circumferential surface of the base 1131. For example, as illustrated in FIG. 6, the base 1131 may have an inclined shape in a counterclockwise direction with respect to the outer circumferential surface of the base 1131.

This structure may allow heat exchange between the heat dissipation protrusion 1132 and the fluid to proceed smoothly.

In addition, because the fluid may flow in the direction in which the heat dissipation protrusion 1132 is inclined, the fluid may easily move in an inner space of the body part, and thus, the uniformity of heating may be improved.

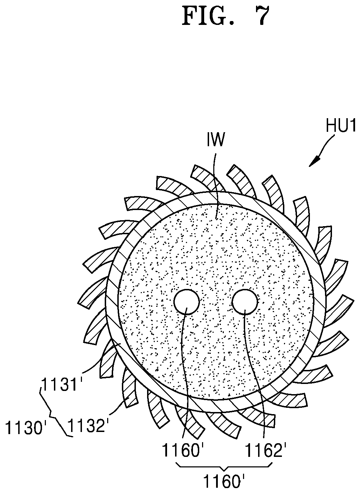

Referring to FIG. 7, in a modification, a heat dissipation part 1130' of the first heating unit HU1 may include a base 1131' and a heat dissipation protrusion 1132'.

The base 1131' may be formed in a shape surrounding a region where an electrode part 1160' is arranged, and may have, for example, a shape similar to a cylinder. In addition, the base 1131' may have a shape surrounding a region where the electrolyzed water IW is arranged.

A plurality of heat dissipation protrusions 1132' may be provided, may be connected to the base 1131', and may protrude from the base 1131' toward the fluid.

Each of the plurality of heat dissipation protrusions 1132' may be formed to have a curve with respect to the outer circumferential surface of the base 1131'. For example, each of the plurality of heat dissipation protrusions 1132' may be formed to have a convex curve with respect to the outer circumferential surface of the base 1131'.

This structure may allow heat exchange between the heat dissipation protrusion 1132' and the fluid to proceed smoothly.

In addition, because the fluid may flow in the direction of the curve of the heat dissipation protrusion 1132', the uniformity of heating may be improved through easy movement or convection of the fluid in the inner space of the body part.

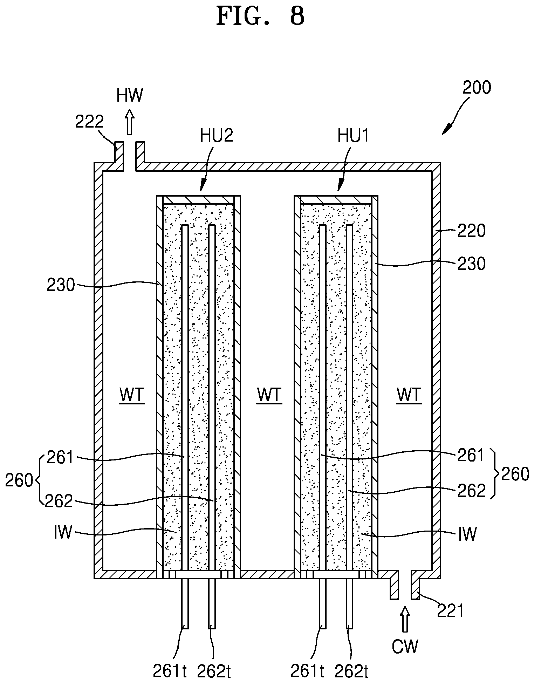

FIG. 8 is a schematic diagram illustrating an electrode-based heating device according to another embodiment of the present disclosure.

Referring to FIG. 8, an electrode-based heating device 200 of the present embodiment may include a body part 220 and the heating unit part HU.

For convenience of description, differences from the above-described embodiments will be mainly described.

The fluid WT may be arranged inside the body part 220.

The body part 220 may have various shapes, and may include at least an inlet 221 for inflowing the fluid WT and an outlet 222 for discharging the fluid WT.

As a specific example, the inlet 221 is formed to face one side of the body part 220, and the outlet 222 may be formed in a region different from the region where the inlet 221 is formed so as to face the other side of the body part 220.

In an optional embodiment, the region where the inlet 221 is formed and the region where the outlet 222 is formed may be formed in opposite directions. For example, the inlet 221 may be formed on one side of regions of the body part 220 with respect to the lengthwise direction of the body part 220, and the outlet 222 may be formed in one region on the other side facing the one side, and in this case, the outlet 222 may be arranged not to overlap the inlet 221.

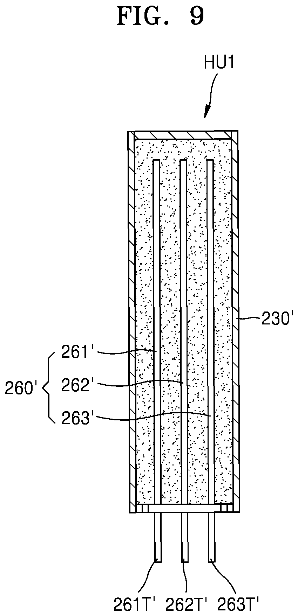

FIG. 9 is a diagram schematically illustrating an optional embodiment of a heating unit, according to an embodiment of the present disclosure.

For convenience of description, differences from the above-described embodiments will be mainly described.

The electrolyzed water IW may be arranged inside the first heating unit HU1. The electrolyzed water IW may be arranged to be distinguished from the external fluid WT.

The first heating unit HU1 may include an electrode part 260' having one or more electrodes.

The electrode part 260' may include a plurality of electrodes.

For example, the electrode part 260' may include a first electrode 261', a second electrode 262', and a third electrode 263'.

As a specific example, the first electrode 261', the second electrode 262', and the third electrode 263' may be arranged to be spaced apart from each other.

In an optional embodiment, the first electrode 261', the second electrode 262', and the third electrode 263' may include a first terminal part 261T', a second terminal part 262T', and a third terminal part 263T', respectively.

A heat dissipation part 230' of the first heating unit HU1 may be arranged to distinguish between the electrolyzed water IW and the fluid, and for example, the electrolyzed water IW may be arranged inside the heat dissipation part 230'.

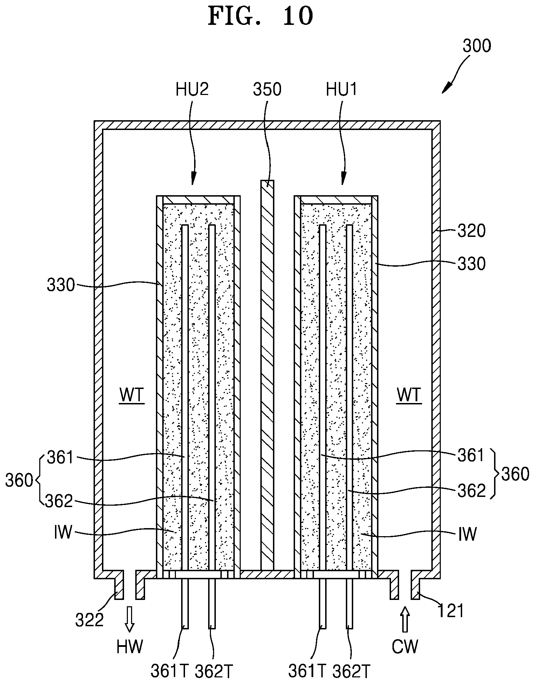

FIG. 10 is a schematic diagram illustrating an electrode-based heating device according to another embodiment of the present disclosure.

Referring to FIG. 10, an electrode-based heating device 300 of the present embodiment may include a body part 320 and the heating unit HU.

The fluid WT may be arranged inside the body part 320. The fluid WT may be of various types, and may include, for example, a liquid or a gas.

The body part 320 may have various shapes, for example, may have a hollow box shape.

In an optional embodiment, the body part 320 may have a pillar shape, for example, a shape similar to a cylinder, as another example, a quadrangular pillar shape, as still another example, a pillar shape including a curved surface similar to an ellipse.

A barrier part 350 may be arranged inside the body part 320.

The barrier part 350 may be arranged between the first heating unit HU1 and the second heating unit HU2.

A space where the first heating unit HU1 is arranged and a space where the second heating unit HU2 is arranged may be separated from each other in at least one region through the barrier part 350.

In addition, the introduced fluid WT may sequentially flow from a space adjacent to the first heating unit HU1 to a space adjacent to the second heating unit HU2 through the barrier part 350. Through this, the fluid WT in the body part 320 may be efficiently heated through the heating unit part HU.

The barrier part 350 may have a shape extending in the lengthwise direction of the first heating unit HU1 and the second heating unit HU2, may have a passage spaced apart from the inner surface of the body part 320 in at least one region in the lengthwise direction, and the passage may serve as a passage for the flow of the fluid WT.

In an optional embodiment, the flow of the fluid WT from at least a side surface of the first heating unit HU1 to a side surface of the second heating unit HU2 may be restricted through the barrier part 350.

The body part 320 may have various shapes, and may include at least an inlet 321 for inflowing the fluid WT and an outlet 322 for discharging the fluid WT.

In an optional embodiment, the inlet 321 and the outlet 322 may be arranged on both sides with the heating unit part HU therebetween. Through this, the fluid WT introduced through the inlet 321 may be heated while flowing through a space adjacent to the first heating unit HU1 of the heating unit part HU and heated while flowing through a space adjacent to the second heating unit HU2 after passing through the barrier part 350, and thus, heating efficiency and heating uniformity over the entire region of the fluid WT may be improved.

The body part 320 may be formed of various materials. For example, the body part 320 may be formed of a durable and lightweight insulating material. In an optional embodiment, the body part 320 may be formed of a plastic material including various types of resins. In another optional embodiment, the body part 320 may include an inorganic material such as ceramic.

In addition, in another optional embodiment, the body part 320 may be formed of a metal material.

As another example, the body part 320 may include a Teflon resin that is a fluorine resin.

In an optional embodiment, from among surfaces of the body part 320, at least an inner surface of the body part 320 adjacent to the fluid WT may include an insulating layer, may include, for example, an inorganic layer, and may contain an inorganic material including ceramic.

In addition, as another example, an insulating layer containing an organic material may be formed on an inner surface of the body part 320 adjacent to the fluid WT.

Through this, it is possible to improve safety in use of the electrode-based heating device 300 by improving mutual insulation characteristics with the heating unit part HU.

The heating unit part HU may include at least a plurality of heating units HU1 and HU2, and may include, for example, the first heating unit HU1 and the second heating unit HU2.

In an optional embodiment, the first heating unit HU1 and the second heating unit HU2 may be arranged to be spaced apart from each other.

In addition, as described above, the barrier part 350 may be arranged between the first heating unit HU1 and the second heating unit HU2.

The electrolyzed water IW may be arranged inside the first heating unit HU1. The electrolyzed water IW may be arranged to be distinguished from the external fluid WT.

For example, the electrolyzed water IW may be arranged inside a heat dissipation part 330 of the first heating unit HU1, such that the electrolyzed water IW and the fluid WT may be distinguished from each other through the heat dissipation part 330.

The first heating unit HU1 may include an electrode part 360 having one or more electrodes.

At least one region of the electrode part 360 may be arranged inside the first heating unit HU1, for example, inside the heat dissipation part 330.

In addition, the electrode part 360 may be arranged to overlap the electrolyzed water IW to heat the electrolyzed water IW in an inner region of the heat dissipation part 330.

In addition, the electrode part 360 may overlap the fluid WT arranged inside the body part 320 in one direction.

The electrode part 360 may include a plurality of electrodes.

For example, the electrode part 360 may include a first electrode 361 and a second electrode 362.

In an optional embodiment, the first electrode 361 and the second electrode 362 may include a first terminal part 361T and a second terminal part 362T, respectively, and a power source may be connected through the first terminal part 361T and the second terminal part 362T.

The heat dissipation part 330 of the first heating unit HU1 may be arranged to distinguish between the electrolyzed water IW and the fluid WT. For example, the heat dissipation part 330 may be located between the electrolyzed water IW and the fluid WT. In addition, the heat dissipation part 330 may be formed to be spaced apart from the electrode part 360.

A detailed configuration of the heat dissipation part 330 may be selectively applied with the descriptions provided above with reference to the embodiments or modifications thereof as needed, and thus, detailed descriptions thereof are omitted.

In addition, the structure of FIG. 2 described above may be selectively applied.

The electrolyzed water IW may be arranged inside the second heating unit HU2. The electrolyzed water IW may be arranged to be distinguished from the external fluid WT.

For example, the electrolyzed water IW may be arranged inside the heat dissipation part 330 of the second heating unit HU2.

The second heating unit HU2 may include the electrode part 360 having one or more electrodes. The electrode part 360 may include a plurality of electrodes.

For example, the electrode part 360 may include a first electrode 361 and a second electrode 362.

The electrolyzed water IW, the heat dissipation part 330 and the electrode part 360 of the second heating unit HU2 may be the same as the configuration of the first heating unit HU1 described above, and as another example, may be applied with selective modifications of some of the components of the first heating unit HU1 as needed, and thus, more detailed descriptions thereof will be omitted.

The electrode-based heating device of the present embodiment may include a heating unit having a fluid arranged inside the body part and including a plurality of heating units arranged such that at least one region thereof overlaps the fluid. For example, although the heating unit is described as including two heating units, three or more heating units may be included as needed.

The plurality of heating units may be arranged to be spaced apart from each other and the fluid overlaps outer surfaces of the plurality of heating units such that the fluid may be easily heated by the heating units. In addition, the fluid may be arranged between the plurality of heating units, such that the heating efficiency of the fluid may be improved.

In addition, the barrier part may be formed between the plurality of heating units, and spaces where the respective heating units are arranged may be distinguished from each other in at least one region through the barrier part. For example, the barrier part may be formed to be elongated in a region where side surfaces of the heating unit face each other. Through this, the flow of the fluid through the passage between an end of the barrier part and the inner surface of the body part may be smoother than the flow of the fluid from a side surface of the heating unit to a side surface of the adjacent heating unit.

Through this, the fluid introduced through the inlet may be heated while flowing in a first direction in a region adjacent to the first heating unit, and heated while flowing in a second direction crossing the first direction in a region adjacent to the second heating unit through the passage between the barrier part and the body part.

As a result, the fluid may be smoothly heated while flowing in a space corresponding to each heating unit in the inner space of the body part, and it is possible to reduce or prevent non-uniform heating of each region of the fluid inside the body part.

Although not illustrated, modifications of the heating units of FIGS. 4 to 7 and the descriptions of the heating units provided above with reference to the embodiments may be selectively applied to the present embodiment.

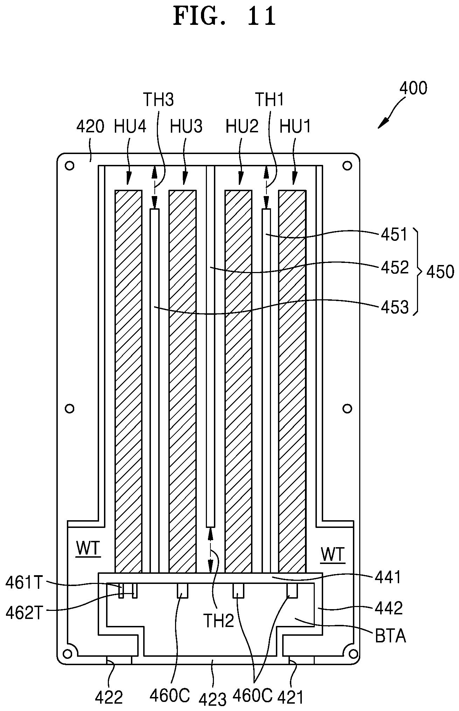

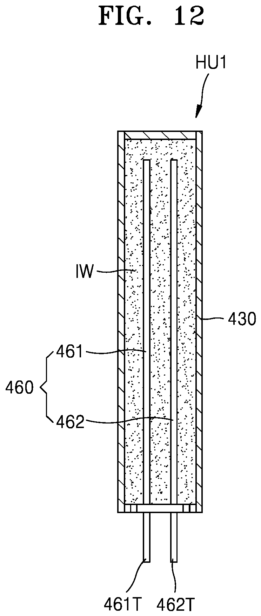

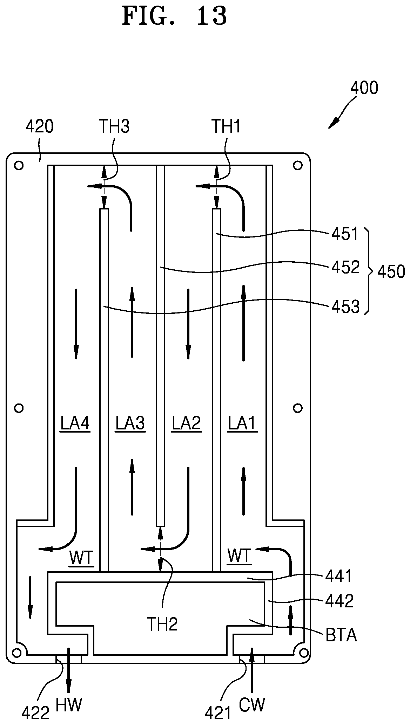

FIG. 11 is a schematic diagram for describing an electrode-based heating device according to another embodiment of the present disclosure, FIG. 12 is a schematic diagram for describing an optional embodiment of a heating unit of FIG. 11, and FIG. 13 is an exemplary diagram for describing the flow of a fluid of the electrode-based heating device of FIG. 11.

An electrode-based heating device 400 of the present embodiment may include a body part 420 and the heating unit part HU.

The heating unit part HU may include a plurality of heating units HU1, HU2, HU3, and HU4.

The fluid WT may be arranged inside the body part 420. The fluid WT may be of various types, and may include, for example, a liquid or a gas.

The body part 420 may have various shapes, for example, may have a hollow box shape.

In an optional embodiment, the body part 420 may have a bottom part 441 in which the flow of the fluid WT is restricted, and may include an upper part opposite to the bottom part 441.

In an optional embodiment, the body part 420 may include a restriction region BTA in which the flow of the fluid WT is restricted, and the restriction region BTA may be defined by the bottom part 441, a side part 442, and a lower part 423.

A barrier part 450 may be arranged inside the body part 420.

The barrier part 450 may be arranged to distinguish between the plurality of heating units HU1, HU2, HU3, and HU4.

For example, the barrier part 450 may include a first barrier 451, a second barrier 452, and a third barrier 453, and as a specific example, they may be sequentially arranged to be spaced apart from each other.

The first barrier 451 may be arranged between the first heating unit HU1 and the second heating unit HU2. A space where the first heating unit HU1 is arranged and a space where the second heating unit HU2 is arranged may be separated from each other in at least one region through the first barrier 451.

In addition, the introduced fluid WT may sequentially flow from a space adjacent to the first heating unit HU1 to a space adjacent to the second heating unit HU2 through the first barrier 451. Through this, the fluid WT inside the body part 420 may be efficiently heated through the first heating unit HU1 and the second heating unit HU2.

The first barrier 451 may have a shape extending in the lengthwise direction of the first heating unit HU1 and the second heating unit HU2 and may have a first passage TH1 spaced apart from the inner surface of the body part 420 in at least one region in the lengthwise direction, and the first passage TH1 may serve as a passage for the flow of the fluid WT.

In an optional embodiment, the flow of the fluid WT from at least a side surface of the first heating unit HU1 to a side surface of the second heating unit HU2 may be restricted through the first barrier 451.

The second barrier 452 may be arranged between the second heating unit HU2 and the third heating unit HU3. A space where the second heating unit HU2 is arranged and a space where the third heating unit HU3 is arranged may be separated from each other in at least one region through the second barrier 452.

In addition, the introduced fluid WT may sequentially flow from a space adjacent to the second heating unit HU2 to a space adjacent to the third heating unit HU3 through the second barrier 452. Through this, the fluid WT in the body part 420 may be efficiently heated through the second heating unit HU2 and the third heating unit HU3.

The second barrier 452 may have a shape extending in the lengthwise direction of the second heating unit HU2 and the third heating unit HU3 and may have a second passage TH2 spaced apart from the inner surface of the body part 420 in at least one region in the lengthwise direction, and the second passage TH2 may serve as a passage for the flow of the fluid WT.

The second passage TH2 may not overlap the first passage TH1, and for example, the second passage TH2 may be adjacent to an end of the second heating unit HU2 in a first direction, and the first passage TH1 may be adjacent to an end of the second heating unit HU2 in the opposite direction to the first direction.

As a specific example, the second passage TH2 and the first passage TH1 may be formed in opposite directions.

In an optional embodiment, the flow of the fluid WT from at least a side surface of the second heating unit HU2 to a side surface of the third heating unit HU3 may be restricted through the second barrier 452.

The third barrier 453 may be arranged between the third heating unit HU3 and the fourth heating unit HU4. A space where the third heating unit HU3 is arranged and a space where the fourth heating unit HU4 is arranged may be separated from each other in at least one region through the third barrier 453.

In addition, the introduced fluid WT may sequentially flow from a space adjacent to the third heating unit HU3 to a space adjacent to the fourth heating unit HU4 through the third barrier 453. Through this, the fluid WT inside the body part 420 may be efficiently heated through the third heating unit HU3 and the fourth heating unit HU4.

The third barrier 453 may have a shape extending in the lengthwise direction of the third heating unit HU3 and the fourth heating unit HU4 and may have a third passage TH3 spaced apart from the inner surface of the body part 420 in at least one region in the lengthwise direction, and the third passage TH3 may serve as a passage for the flow of the fluid WT.

The third passage TH3 may not overlap the second passage TH2, and for example, the third passage TH3 and the second passage TH2 may be formed in opposite directions.

In an optional embodiment, the third passage TH3 may overlap the first passage TH1.

In an optional embodiment, the flow of the fluid WT from at least a side surface of the third heating unit HU3 to a side surface of the fourth heating unit HU4 may be restricted through the third barrier 453.

Passage parts, for example, the first passage TH1, the second passage TH2, and the third passage TH3, may have widths W to allow the fluid WT to pass through them, and in an optional embodiment, the widths W may be equal to each other.

The body part 420 may have various shapes, and may include at least an inlet 421 for inflowing the fluid WT and an outlet 422 for discharging the fluid WT.

The inlet 421 and the outlet 422 may be arranged on both sides of the restriction region BTA. Through this, the fluid WT introduced into the inlet 421 may pass through one side of the restriction region BTA, then be heated while passing through a region adjacent to the heating unit part HU, and then discharged through the outlet 422.

In an optional embodiment, the inlet 421 and the outlet 422 may be arranged on both sides with the heating unit part HU therebetween. Through this, heating efficiency and heating uniformity over the entire region of the fluid WT may be improved.

The body part 420 may be formed of various materials. For example, the body part 420 may be formed of a durable and lightweight insulating material. In an optional embodiment, the body part 420 may be formed of a plastic material including various types of resins. In another optional embodiment, the body part 420 may include an inorganic material such as ceramic.

In addition, in another optional embodiment, the body part 420 may be formed of a metal material.

As another example, the body part 420 may include a Teflon resin that is a fluorine resin.

In an optional embodiment, from among surfaces of the body part 420, at least an inner surface of the body part 420 adjacent to the fluid WT may include an insulating layer, may include, for example, an inorganic layer, and may contain an inorganic material including ceramic.

In addition, as another example, an insulating layer containing an organic material may be formed on an inner surface of the body part 420 adjacent to the fluid WT.

Through this, it is possible to improve safety in use of the electrode-based heating device 400 by improving mutual insulation characteristics with the heating unit part HU.

The heating unit part HU may include at least a plurality of heating units HU1, HU2, HU3, and HU4, for example, the first heating unit HU1, the second heating unit HU2, the third heating unit HU3, and the fourth heating unit HU4.

In an optional embodiment, the first heating unit HU1, the second heating unit HU2, the third heating unit HU3, and the fourth heating unit HU4 may be arranged to be spaced apart from each other.

The first heating unit HU1 will be described with reference to FIG. 12.

The electrolyzed water IW may be arranged inside the first heating unit HU1. The electrolyzed water IW may be arranged to be distinguished from the external fluid WT.

For example, the electrolyzed water IW may be arranged inside a heat dissipation part 430 of the first heating unit HU1, such that the electrolyzed water IW and the fluid WT may be distinguished from each other through the heat dissipation part 430.

The first heating unit HU1 may include an electrode part 460 having one or more electrodes.

At least one region of the electrode part 460 may be arranged inside the first heating unit HU1, for example, inside the heat dissipation part 430.

In addition, the electrode part 460 may be arranged to overlap the electrolyzed water IW to heat the electrolyzed water IW in an inner region of the heat dissipation part 430.

In addition, the electrode part 460 may overlap the fluid WT arranged inside the body part 420 in one direction.

The electrode part 460 may include a plurality of electrodes.

For example, the electrode part 460 may include a first electrode 461 and a second electrode 462.

In an optional embodiment, the first electrode 461 and the second electrode 462 may include a first terminal part 461T and a second terminal part 462T, respectively, and a power source may be connected through the first terminal part 461T and the second terminal part 462T.

In an optional embodiment, as illustrated in the second heating unit HU2, a protection part 460C may be formed on each of the first terminal part 461T and the second terminal part 462T.

The heat dissipation part 430 of the first heating unit HU1 may be arranged to distinguish between the electrolyzed water IW and the fluid WT. For example, the heat dissipation part 430 may be located between the electrolyzed water IW and the fluid WT. In addition, the heat dissipation part 430 may be formed to be spaced apart from the electrode part 460.

A detailed configuration of the heat dissipation part 430 may be selectively applied with the descriptions provided above with reference to the embodiments or modifications thereof as needed, and thus, detailed descriptions thereof are omitted.

In addition, the structure of FIG. 2 described above may be selectively applied.

The second to fourth heating units HU2, HU3, and HU4 may have the same configuration as that of the first heating unit HU1 and may be modified and applied within a similar range as needed, and thus, a detailed description thereof will be omitted.

The flow of the fluid WT will be described with reference to FIG. 13. For convenience of description, the plurality of heating units HU1, HU2, HU3, and HU4 of the heating unit part HU are omitted in FIG. 13. In addition, for convenience of description, the flow of the fluid WT is indicated by arrows. The arrows are for convenience of description and may be marks for schematically describing the flow direction.

As illustrated in FIG. 13, the unheated fluid WT introduced through the inlet 421, for example, cold water, may pass through a first heating path LA1. The first heating path LA1 may include a region overlapping the first heating unit HU1. The fluid WT may flow from the first heating path LA1 through the first passage TH1 to a second heating path LA2. The second heating path LA2 may include a region overlapping the second heating unit HU2. The fluid WT may flow from the second heating path LA2 through the second passage TH2 to a third heating path LA3. The third heating path LA3 may include a region overlapping the third heating unit HU3. The fluid WT may flow from the third heating path LA3 through the third passage TH3 to a fourth heating path LA4. The fourth heating path LA4 may include a region overlapping the fourth heating unit HU4. Then, the fluid WT may be discharged through the outlet 422, and for example, heated hot water may be discharged.

The electrode-based heating device of the present embodiment may include a heating unit having a fluid arranged inside the body part and including a plurality of heating units arranged such that at least one region thereof overlaps the fluid.

The plurality of heating units may be arranged to be spaced apart from each other and the fluid overlaps outer surfaces of the plurality of heating units such that the fluid may be easily heated by the heating units. In addition, the fluid may be arranged between the plurality of heating units, such that the heating efficiency of the fluid may be improved.

In addition, a barrier part may be formed between the plurality of heating units, and a passage part may be formed in one region of the barrier part to allow the fluid to pass therethrough.

For example, the barrier part may include a plurality of barriers, and passage parts of the barriers may be formed to alternate with each other.

Through this structure, the barrier part may allow the fluid to easily move in spaces adjacent to the respective heating units arranged to be distinguished from each other.

In addition, through a specific configuration of the passage part, the fluid may be effectively heated by a first heating unit while flowing in one direction to pass through a first passage part, then effectively heated by a second heating unit while flowing in the opposite direction to pass through a second passage part, then effectively heated by a third heating unit while flowing in the one direction to pass through a third passage part, then heated by a fourth heating unit while flowing in the opposite direction, and then discharged through the outlet.

As a result, the fluid may be smoothly heated while flowing in a space corresponding to each heating unit in the inner space of the body part, and it is possible to reduce or prevent non-uniform heating of each region of the fluid inside the body part and easily improve thermal efficiency of the electrode-based heating device.

Although not illustrated, modifications of the heating units of FIGS. 4 to 7 and the descriptions of the heating units provided above with reference to the embodiments may be selectively applied to the present embodiment.

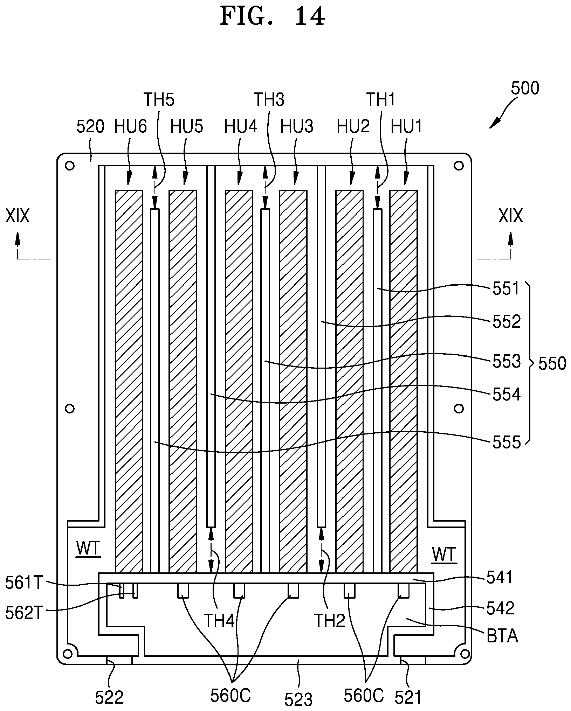

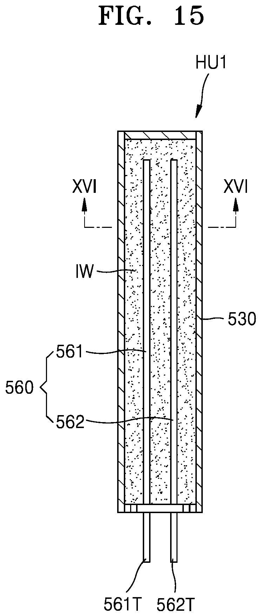

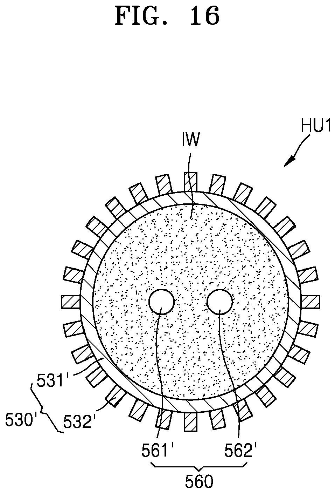

FIG. 14 is a schematic diagram illustrating an electrode-based heating device according to another embodiment of the present disclosure, FIG. 15 is a schematic diagram illustrating an optional embodiment of a heating unit of FIG. 14, and FIG. 16 is an example of a cross-sectional view taken along line XVI-XVI of FIG. 15.

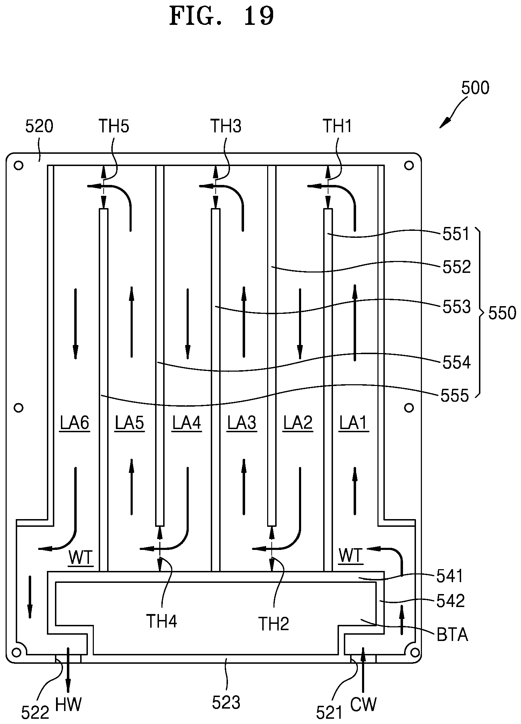

FIG. 19 is an exemplary diagram for describing the flow of a fluid in the electrode-based heating device of FIG. 14.

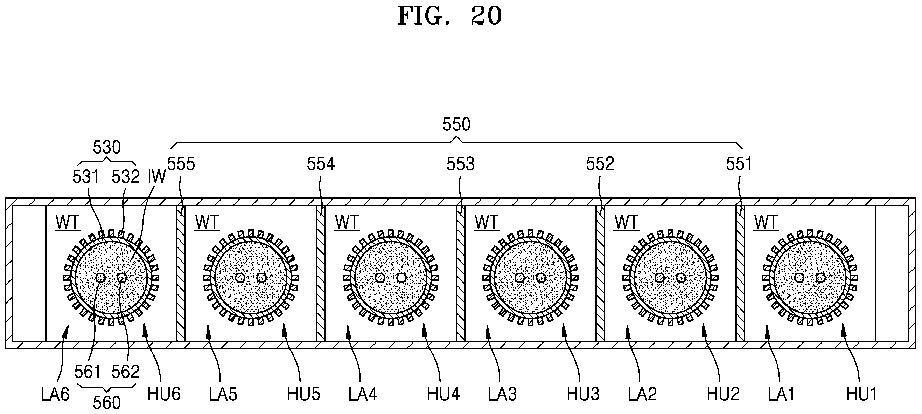

FIG. 20 is a cross-sectional view taken along line XIX-XIX of FIG. 14.

An electrode-based heating device 500 of the present embodiment may include a body part 520 and the heating unit part HU.

The heating unit part HU may include a plurality of heating units HU1, HU2, HU3, HU4, HU5, and HU6.

The fluid WT may be arranged inside the body part 520. The fluid WT may be of various types, and may include, for example, a liquid or a gas.

The body part 520 may have various shapes, for example, may have a hollow box shape.

In an optional embodiment, the body part 520 may have a bottom part 541 in which the flow of the fluid WT is restricted, and may include an upper part opposite to the bottom part 541.

In an optional embodiment, the body part 520 may include the restriction region BTA in which the flow of the fluid WT is restricted, and the restriction region BTA may be defined by the bottom part 541, a side part 542, and a lower part 523.

A barrier part 550 may be arranged inside the body part 520.

The barrier part 550 may be arranged to distinguish between the plurality of heating units HU1, HU2, HU3, HU4, HU5, and HU6.

For example, the barrier part 550 may include a first barrier 551, a second barrier 552, a third barrier 553, a fourth barrier 554, and a fifth barrier 555, and as a specific example, they may be sequentially arranged to be spaced apart from each other.

The first barrier 551 may be arranged between the first heating unit HU1 and the second heating unit HU2. A space where the first heating unit HU1 is arranged and a space where the second heating unit HU2 is arranged may be separated from each other in at least one region through the first barrier 551.

In addition, the introduced fluid WT may sequentially flow from a space adjacent to the first heating unit HU1 to a space adjacent to the second heating unit HU2 through the first barrier 551. Through this, the fluid WT inside the body part 520 may be efficiently heated through the first heating unit HU1 and the second heating unit HU2.

The first barrier 551 may have a shape extending in the lengthwise direction of the first heating unit HU1 and the second heating unit HU2 and may have a first passage TH1 spaced apart from the inner surface of the body part 520 in at least one region in the lengthwise direction, and the first passage TH1 may serve as a passage for the flow of the fluid WT.

In an optional embodiment, the flow of the fluid WT from at least a side surface of the first heating unit HU1 to a side surface of the second heating unit HU2 may be restricted through the first barrier 551. For example, as illustrated in FIG. 20, the first barrier 551 may be connected to side surfaces of an inner surface of the body part 520 facing each other in the thickness direction of the first heating unit HU1.

The second barrier 552 may be arranged between the second heating unit HU2 and the third heating unit HU3. A space where the second heating unit HU2 is arranged and a space where the third heating unit HU3 is arranged may be separated from each other in at least one region through the second barrier 552.

In addition, the introduced fluid WT may sequentially flow from a space adjacent to the second heating unit HU2 to a space adjacent to the third heating unit HU3 through the second barrier 552. Through this, the fluid WT in the body part 520 may be efficiently heated through the second heating unit HU2 and the third heating unit HU3.

The second barrier 552 may have a shape extending in the lengthwise direction of the second heating unit HU2 and the third heating unit HU3 and may have a second passage TH2 spaced apart from the inner surface of the body part 520 in at least one region in the lengthwise direction, and the second passage TH2 may serve as a passage for the flow of the fluid WT.

The second passage TH2 may not overlap the first passage TH1, and for example, the second passage TH2 may be adjacent to an end of the second heating unit HU2 in a first direction, and the first passage TH1 may be adjacent to an end of the second heating unit HU2 in the opposite direction to the first direction.

As a specific example, the second passage TH2 may not overlap the first passage TH1, and for example, the second passage TH2 and the first passage TH1 may be formed to face opposite ends among both ends of the heating unit part HU.

In an optional embodiment, the flow of the fluid WT from at least a side surface of the second heating unit HU2 to a side surface of the third heating unit HU3 may be restricted through the second barrier 552. For example, as illustrated in FIG. 20, the second barrier 552 may be connected to side surfaces of an inner surface of the body part 520 facing each other in the thickness direction of the second heating unit HU2.

The third barrier 553 may be arranged between the third heating unit HU3 and the fourth heating unit HU4. A space where the third heating unit HU3 is arranged and a space where the fourth heating unit HU4 is arranged may be separated from each other in at least one region through the third barrier 553.

In addition, the introduced fluid WT may sequentially flow from a space adjacent to the third heating unit HU3 to a space adjacent to the fourth heating unit HU4 through the third barrier 553. Through this, the fluid WT inside the body part 520 may be efficiently heated through the third heating unit HU3 and the fourth heating unit HU4.

The third barrier 553 may have a shape extending in the lengthwise direction of the third heating unit HU3 and the fourth heating unit HU4 and may have a third passage TH3 spaced apart from the inner surface of the body part 520 in at least one region in the lengthwise direction, and the third passage TH3 may serve as a passage for the flow of the fluid WT.

The third passage TH3 may not overlap the second passage TH2, and for example, the third passage TH3 and the second passage TH2 may be formed to face opposite ends among both ends of the heating unit part HU.

In an optional embodiment, the third passage TH3 may overlap the first passage TH1.

In an optional embodiment, the flow of the fluid WT from at least a side surface of the third heating unit HU3 to a side surface of the fourth heating unit HU4 may be restricted through the third barrier 553. For example, as illustrated in FIG. 20, the third barrier 553 may be connected to side surfaces of an inner surface of the body part 520 facing each other in the thickness direction of the third heating unit HU3.

The fourth barrier 554 may be arranged between the fourth heating unit HU4 and the fifth heating unit HU5. A space where the fourth heating unit HU4 is arranged and a space where the fifth heating unit HU5 is arranged may be separated from each other in at least one region through the fourth barrier 554.

In addition, the introduced fluid WT may sequentially flow from a space adjacent to the fourth heating unit HU4 to a space adjacent to the fifth heating unit HU5 through the fourth barrier 554. Through this, the fluid WT inside the body part 520 may be efficiently heated through the fourth heating unit HU4 and the fifth heating unit HU5.

The fourth barrier 554 may have a shape extending in the lengthwise direction of the fourth heating unit HU4 and the fifth heating unit HU5 and may have a fourth passage TH4 spaced apart from the inner surface of the body part 520 in at least one region in the lengthwise direction, and the fourth passage TH4 may serve as a passage for the flow of the fluid WT.

The fourth passage TH4 may not overlap the third passage TH3, and for example, the fourth passage TH4 and the third passage TH3 may be formed to face opposite ends among both ends of the heating unit part HU.

In an optional embodiment, the fourth passage TH4 may overlap the second passage TH2.

In an optional embodiment, the flow of the fluid WT from at least a side surface of the fourth heating unit HU4 to a side surface of the fifth heating unit HU5 may be restricted through the fourth barrier 554. For example, as illustrated in FIG. 20, the fourth barrier 554 may be connected to side surfaces of an inner surface of the body part 520 facing each other in the thickness direction of the fourth heating unit HU4.

The fifth barrier 555 may be arranged between the fifth heating unit HU5 and the sixth heating unit HU6. A space where the fifth heating unit HU5 is arranged and a space where the sixth heating unit HU6 is arranged may be separated from each other in at least one region through the fifth barrier 555.

In addition, the introduced fluid WT may sequentially flow from a space adjacent to the fifth heating unit HU5 to a space adjacent to the sixth heating unit HU6 through the fifth barrier 555. Through this, the fluid WT inside the body part 520 may be efficiently heated through the fifth heating unit HU5 and the sixth heating unit HU6.

The fifth barrier 555 may have a shape extending in the lengthwise direction of the fifth heating unit HU5 and the sixth heating unit HU6 and may have a fifth passage TH5 spaced apart from the inner surface of the body part 520 in at least one region in the lengthwise direction, and the fifth passage TH5 may serve as a passage for the flow of the fluid WT.

The fifth passage TH5 may not overlap the fourth passage TH4, and for example, the fifth passage TH5 and the fourth passage TH4 may be formed to face opposite ends among both ends of the heating unit part HU.

In an optional embodiment, the fifth passage TH5 may overlap the third passage TH3 or the first passage TH1.

In an optional embodiment, the flow of the fluid WT from at least a side surface of the fifth heating unit HU5 to a side surface of the sixth heating unit HU6 may be restricted through the fifth barrier 555. For example, as illustrated in FIG. 20, the fifth barrier 555 may be connected to side surfaces of an inner surface of the body part 520 facing each other in the thickness direction of the fifth heating unit HU5.

Passage parts, for example, the first passage TH1, the second passage TH2, and the third passage TH3, may have widths to allow the fluid WT to pass through them, and in an optional embodiment, the widths may be equal to each other.

The body part 520 may have various shapes, and may include at least an inlet 521 for inflowing the fluid WT and an outlet 522 for discharging the fluid WT.

The inlet 521 and the outlet 522 may be arranged on both sides of the restriction region BTA. Through this, the fluid WT introduced into the inlet 521 may pass through one side of the restriction region BTA, then be heated while passing through a region adjacent to the heating unit part HU, and then discharged through the outlet 522.

In an optional embodiment, the inlet 521 and the outlet 522 may be arranged on both sides with the heating unit part HU therebetween. Through this, heating efficiency and heating uniformity over the entire region of the fluid WT may be improved.

The body part 520 may be formed of various materials. For example, the body part 520 may be formed of a durable and lightweight insulating material. In an optional embodiment, the body part 520 may be formed of a plastic material including various types of resins. In another optional embodiment, the body part 520 may include an inorganic material such as ceramic.

In addition, in another optional embodiment, the body part 520 may be formed of a metal material.

As another example, the body part 520 may include a Teflon resin that is a fluorine resin.

In an optional embodiment, from among surfaces of the body part 520, at least an inner surface of the body part 520 adjacent to the fluid WT may include an insulating layer, may include, for example, an inorganic layer, and may contain an inorganic material including ceramic.

In addition, as another example, an insulating layer containing an organic material may be formed on an inner surface of the body part 520 adjacent to the fluid WT.

Through this, it is possible to improve safety in use of the electrode-based heating device 500 by improving mutual insulation characteristics with the heating unit part HU.

The heating unit part HU may include at least a plurality of heating units HU1, HU2, HU3, HU4, HU5, and HU6, for example, the first heating unit HU1, the second heating unit HU2, the third heating unit HU3, the fourth heating unit HU4, the fifth heating unit HU5, and the sixth heating unit HU6.

In an optional embodiment, the first heating unit HU1, the second heating unit HU2, the third heating unit HU3, the fourth heating unit HU4, the fifth heating unit HU5, and the sixth heating unit HU6 may be arranged to be spaced apart from each other.

The first heating unit HU1 will be described with reference to FIG. 15.

The electrolyzed water IW may be arranged inside the first heating unit HU1. The electrolyzed water IW may be arranged to be distinguished from the external fluid WT.

For example, the electrolyzed water IW may be arranged inside a heat dissipation part 530 of the first heating unit HU1, such that the electrolyzed water IW and the fluid WT may be distinguished from each other through the heat dissipation part 530.

The first heating unit HU1 may include an electrode part 560 having one or more electrodes.

At least one region of the electrode part 560 may be arranged inside the first heating unit HU1, for example, inside the heat dissipation part 530.

In addition, the electrode part 560 may be arranged to overlap the electrolyzed water IW to heat the electrolyzed water IW in an inner region of the heat dissipation part 530.

In addition, the electrode part 560 may overlap the fluid WT arranged inside the body part 520 in one direction.

The electrode part 560 may include a plurality of electrodes.

For example, the electrode part 560 may include a first electrode 561 and a second electrode 562.

In an optional embodiment, the first electrode 561 and the second electrode 562 may include a first terminal part 561T and a second terminal part 562T, respectively, and a power source may be connected through the first terminal part 561T and the second terminal part 562T.

In an optional embodiment, as illustrated in the second heating unit HU2, a protection part 560C may be formed on each of the first terminal part 561T and the second terminal part 562T.

The heat dissipation part 530 of the first heating unit HU1 may be arranged to distinguish between the electrolyzed water IW and the fluid WT. For example, the heat dissipation part 530 may be located between the electrolyzed water IW and the fluid WT. In addition, the heat dissipation part 530 may be formed to be spaced apart from the electrode part 560.

In an optional embodiment, as illustrated in FIG. 16, a heat dissipation part 530' of the first heating unit HU1 may include a base 531' and a heat dissipation protrusion 532'.

The base 531' may be formed in a shape surrounding the electrolyzed water IW, and may have, for example, a shape similar to a cylinder.

A plurality of heat dissipation protrusions 532' may be provided, may be connected to the base 531', and may protrude from the base 531' toward the fluid. In addition, the base 531' may be formed to face an electrode part 560'.

Specific details are the same as those described in the above-described embodiment of FIG. 5 or may be modified as needed, and thus, a description thereof will be omitted.

In addition, the structure of FIG. 2 described above may be selectively applied.

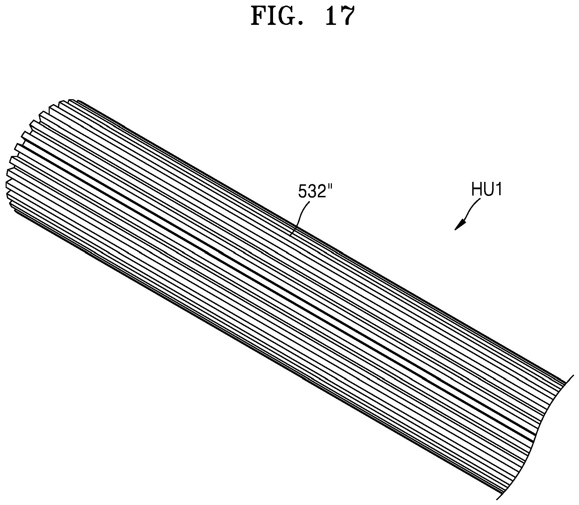

FIG. 17 is a perspective view schematically illustrating an optional embodiment of the heating unit of FIG. 14.

Referring to FIG. 17, the first heating unit HU1 may have an overall shape similar to an elongated pillar. For example, the base of the first heating unit HU1 may have an elongated structure, and a plurality of heat dissipation protrusions 532" on the outer surface of the base may be formed to be elongated in the lengthwise direction of the base.

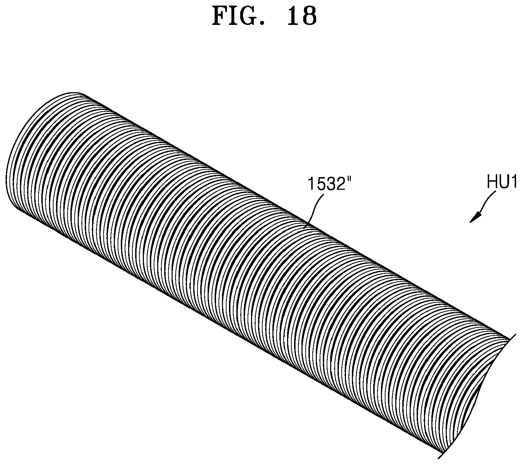

FIG. 18 is a perspective view schematically illustrating an optional embodiment of the heating unit of FIG. 14.

Referring to FIG. 18, the first heating unit HU1 may have an overall shape similar to an elongated pillar. For example, the base of the first heating unit HU1 may have an elongated structure, and a heat dissipation protrusion 1532" may be formed along the circumference of the outer surface of the base. For example, a plurality of heat dissipation protrusions 1532" may have a shape surrounding the outer surface of the base.

In addition, as another example, one or more heat dissipation protrusions 1532" may be spirally formed in the lengthwise direction to surround the outer surface of the base, and as a specific example, may constitute one elongated spiral structure.

Through this, it is possible to increase a heat dissipation effect by increasing the contact surface between the heat dissipation protrusion 1532" and the fluid. In addition, the fluid may easily flow along the spiral of the heat dissipation protrusion 1532", such that the fluid may be easily moved.

The second to sixth heating units HU2, HU3, HU4, HU5, and HU6 may have the same configuration as that of the first heating unit HU1 and may be modified and applied within a similar range as needed, and thus, a detailed description thereof will be omitted.

The flow of the fluid WT will be described with reference to FIG. 19. For convenience of description, the plurality of heating units HU1, HU2, HU3, HU4, HU5, and HU6 of the heating unit part HU are omitted in FIG. 19. In addition, for convenience of description, the flow of the fluid WT is indicated by arrows. The arrows are for convenience of description and may be marks for schematically describing the flow direction.

As illustrated in FIG. 19, the unheated fluid WT introduced through the inlet 521, for example, cold water, may pass through the first heating path LA1. The first heating path LA1 may include a region overlapping the first heating unit HU1. The fluid WT may flow from the first heating path LA1 through the first passage TH1 to the second heating path LA2. The second heating path LA2 may include a region overlapping the second heating unit HU2. The fluid WT may flow from the second heating path LA2 through the second passage TH2 to the third heating path LA3. The third heating path LA3 may include a region overlapping the third heating unit HU3. The fluid WT may flow from the third heating path LA3 through the third passage TH3 to the fourth heating path LA4. The fourth heating path LA4 may include a region overlapping the fourth heating unit HU4. The fluid WT may flow from the fourth heating path LA4 through the fourth passage TH4 to a fifth heating path LA5. The fifth heating path LA5 may include a region overlapping the fifth heating unit HU5. The fluid WT may flow from the fifth heating path LA5 through the fifth passage TH5 to a sixth heating path LA6. The sixth heating path LA6 may include a region overlapping the sixth heating unit HU6.

Then, the fluid WT may be discharged through the outlet 522, and for example, heated hot water may be discharged.

The electrode-based heating device of the present embodiment may include a heating unit having a fluid arranged inside the body part and including a plurality of heating units arranged such that at least one region thereof overlaps the fluid.

The plurality of heating units may be arranged to be spaced apart from each other and the fluid overlaps outer surfaces of the plurality of heating units such that the fluid may be easily heated by the heating units. In addition, the fluid may be arranged between the plurality of heating units, such that the heating efficiency of the fluid may be improved.

In addition, a barrier part may be formed between the plurality of heating units, and a passage part may be formed in one region of the barrier part to allow the fluid to pass therethrough.

For example, the barrier part may include a plurality of barriers, and passage parts of the barriers may be formed to alternate with each other.

Through this structure, the barrier part may allow the fluid to easily move in spaces adjacent to the respective heating units arranged to be distinguished from each other.

In addition, through a specific configuration of the passage part, the fluid may be sequentially heated by the plurality of heating units of the heating unit part while flowing in one direction. For example, the fluid may be heated while flowing along the sequentially arranged heating units, and the flow direction of the fluid may be reversed whenever the fluid moves to an adjacent heating unit.

Through this, it is possible to improve heating efficiency of the fluid by generating a smooth flow of the fluid along each heating unit.

Although not illustrated, modifications of the heating units of FIGS. 4 to 7 and the descriptions of the heating units provided above with reference to the embodiments may be selectively applied to the present embodiment.

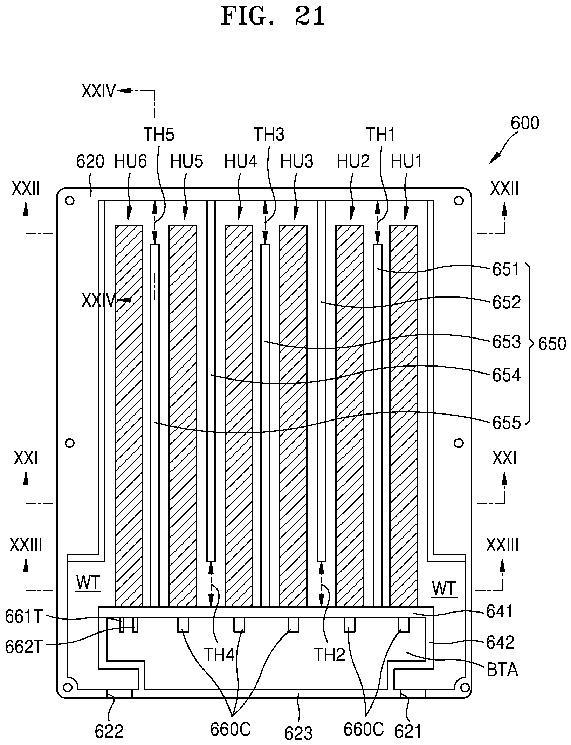

FIG. 21 is a schematic diagram illustrating an electrode-based heating device according to another embodiment of the present disclosure.

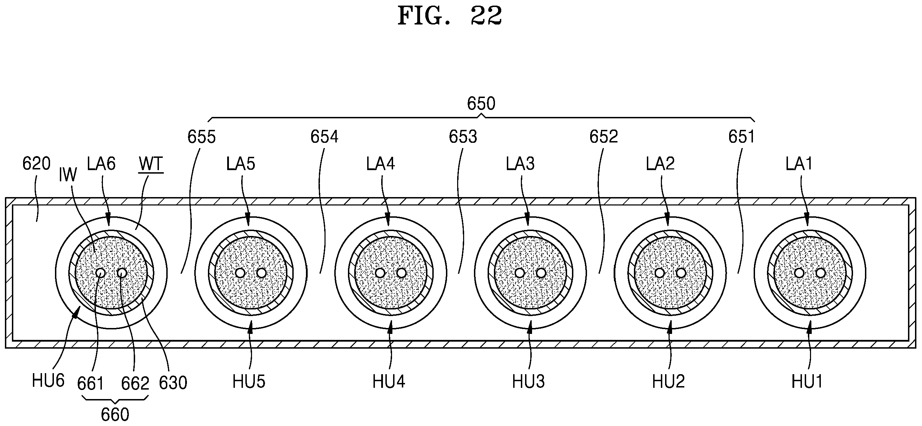

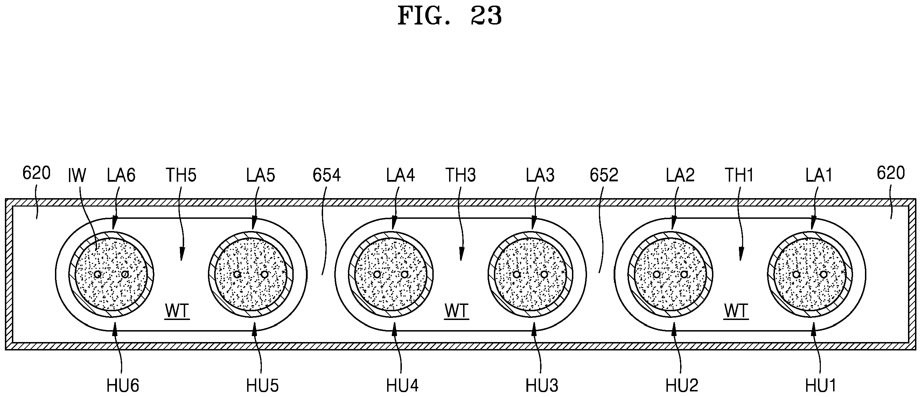

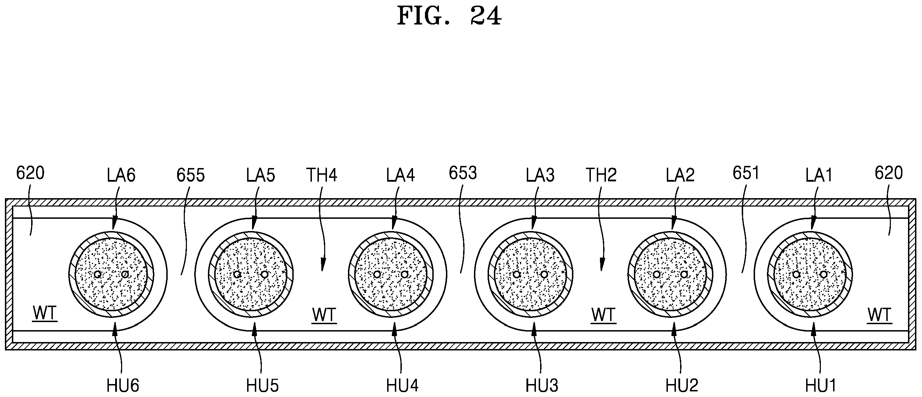

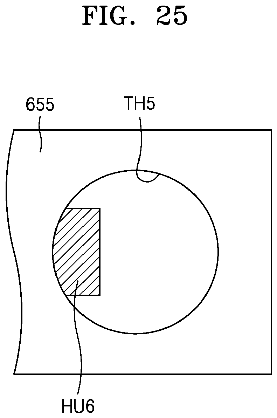

FIG. 22 is a cross-sectional view taken along line X X I -X X I of FIG. 21, FIG. 23 is a cross-sectional view taken along line X X II-X X II of FIG. 21, FIG. 24 is a cross-sectional view taken along line X XIII-X XIII of FIG. 21, and FIG. 25 is a cross-sectional view taken along line X XIV-X XIV of FIG. 21.

An electrode-based heating device 600 of the present embodiment may include a body part 620 and the heating unit part HU.

The heating unit part HU may include a plurality of heating units HU1, HU2, HU3, HU4, HU5, and HU6.

The fluid WT may be arranged inside the body part 620. The fluid WT may be of various types, and may include, for example, a liquid or a gas.

The body part 620 may have various shapes, for example, may have a hollow box shape.

In an optional embodiment, the body part 620 may have a bottom part 641 in which the flow of the fluid WT is restricted, and may include an upper part opposite to the bottom part 641.

In an optional embodiment, the body part 620 may include the restriction region BTA in which the flow of the fluid WT is restricted, and the restriction region BTA may be defined by the bottom part 641, a side part 642, and a lower part 623.

A barrier part 650 may be arranged inside the body part 620.

The barrier part 650 may be arranged to distinguish between the plurality of heating units HU1, HU2, HU3, HU4, HU5, and HU6.

For example, the barrier part 650 may include a first barrier 651, a second barrier 652, a third barrier 653, a fourth barrier 654, and a fifth barrier 655, and as a specific example, they may be sequentially arranged to be spaced apart from each other.

The first barrier 651 may be arranged between the first heating unit HU1 and the second heating unit HU2. A space where the first heating unit HU1 is arranged and a space where the second heating unit HU2 is arranged may be separated from each other in at least one region through the first barrier 651.

In addition, the introduced fluid WT may sequentially flow from a space adjacent to the first heating unit HU1 to a space adjacent to the second heating unit HU2 through the first barrier 651. Through this, the fluid WT inside the body part 620 may be efficiently heated through the first heating unit HU1 and the second heating unit HU2.

The first barrier 651 may have a shape extending in the lengthwise direction of the first heating unit HU1 and the second heating unit HU2 and may have a first passage TH1 spaced apart from the inner surface of the body part 620 in at least one region in the lengthwise direction, and the first passage TH1 may serve as a passage for the flow of the fluid WT.

In an optional embodiment, the flow of the fluid WT from at least a side surface of the first heating unit HU1 to a side surface of the second heating unit HU2 may be restricted through the first barrier 651. For example, as illustrated in FIG. 22, the first barrier 651 may be connected to side surfaces of an inner surface of the body part 620 facing each other in the thickness direction of the first heating unit HU1. Among surfaces of the first barrier 651, surfaces respectively facing the first heating unit HU1 and the second heating unit HU2 may have a curved shape, and as a specific example, may have curved surfaces corresponding to the first heating unit HU1 and the second heating unit HU2, respectively.

The second barrier 652 may be arranged between the second heating unit HU2 and the third heating unit HU3. A space where the second heating unit HU2 is arranged and a space where the third heating unit HU3 is arranged may be separated from each other in at least one region through the second barrier 652.

In addition, the introduced fluid WT may sequentially flow from a space adjacent to the second heating unit HU2 to a space adjacent to the third heating unit HU3 through the second barrier 652. Through this, the fluid WT in the body part 620 may be efficiently heated through the second heating unit HU2 and the third heating unit HU3.

The second barrier 652 may have a shape extending in the lengthwise direction of the second heating unit HU2 and the third heating unit HU3 and may have the second passage TH2 spaced apart from the inner surface of the body part 620 in at least one region in the lengthwise direction, and the second passage TH2 may serve as a passage for the flow of the fluid WT.

The second passage TH2 may not overlap the first passage TH1, and for example, the second passage TH2 may be adjacent to an end of the second heating unit HU2 in a first direction, and the first passage TH1 may be adjacent to an end of the second heating unit HU2 in the opposite direction to the first direction.

As a specific example, the second passage TH2 may not overlap the first passage TH1, and for example, the second passage TH2 and the first passage TH1 may be formed to face opposite ends among both ends of the heating unit part HU.

In an optional embodiment, the flow of the fluid WT from at least a side surface of the second heating unit HU2 to a side surface of the third heating unit HU3 may be restricted through the second barrier 652. For example, as illustrated in FIG. 22, the second barrier 652 may be connected to side surfaces of an inner surface of the body part 620 facing each other in the thickness direction of the second heating unit HU2. Among surfaces of the second barrier 652, surfaces respectively facing the second heating unit HU2 and the third heating unit HU3 may have a curved shape, and as a specific example, may have curved surfaces corresponding to the second heating unit HU2 and the third heating unit HU3, respectively.

The third barrier 653 may be arranged between the third heating unit HU3 and the fourth heating unit HU4. A space where the third heating unit HU3 is arranged and a space where the fourth heating unit HU4 is arranged may be separated from each other in at least one region through the third barrier 653.

In addition, the introduced fluid WT may sequentially flow from a space adjacent to the third heating unit HU3 to a space adjacent to the fourth heating unit HU4 through the third barrier 653. Through this, the fluid WT inside the body part 620 may be efficiently heated through the third heating unit HU3 and the fourth heating unit HU4.

The third barrier 653 may have a shape extending in the lengthwise direction of the third heating unit HU3 and the fourth heating unit HU4 and may have the third passage TH3 spaced apart from the inner surface of the body part 620 in at least one region in the lengthwise direction, and the third passage TH3 may serve as a passage for the flow of the fluid WT.

The third passage TH3 may not overlap the second passage TH2, and for example, the third passage TH3 and the second passage TH2 may be formed to face opposite ends among both ends of the heating unit part HU.

In an optional embodiment, the third passage TH3 may overlap the first passage TH1.

In an optional embodiment, the flow of the fluid WT from at least a side surface of the third heating unit HU3 to a side surface of the fourth heating unit HU4 may be restricted through the third barrier 653. For example, as illustrated in FIG. 22, the third barrier 653 may be connected to side surfaces of an inner surface of the body part 620 facing each other in the thickness direction of the third heating unit HU3. Among surfaces of the third barrier 653, surfaces respectively facing the third heating unit HU3 and the fourth heating unit HU4 may have a curved shape, and as a specific example, may have curved surfaces corresponding to the third heating unit HU3 and the fourth heating unit HU4, respectively.

The fourth barrier 654 may be arranged between the fourth heating unit HU4 and the fifth heating unit HU5. A space where the fourth heating unit HU4 is arranged and a space where the fifth heating unit HU5 is arranged may be separated from each other in at least one region through the fourth barrier 654.

In addition, the introduced fluid WT may sequentially flow from a space adjacent to the fourth heating unit HU4 to a space adjacent to the fifth heating unit HU5 through the fourth barrier 654. Through this, the fluid WT inside the body part 620 may be efficiently heated through the fourth heating unit HU4 and the fifth heating unit HU5.

The fourth barrier 654 may have a shape extending in the lengthwise direction of the fourth heating unit HU4 and the fifth heating unit HU5 and may have the fourth passage TH4 spaced apart from the inner surface of the body part 620 in at least one region in the lengthwise direction, and the fourth passage TH4 may serve as a passage for the flow of the fluid WT.

The fourth passage TH4 may not overlap the third passage TH3, and for example, the fourth passage TH4 and the third passage TH3 may be formed to face opposite ends among both ends of the heating unit part HU.

In an optional embodiment, the fourth passage TH4 may overlap the second passage TH2.

In an optional embodiment, the flow of the fluid WT from at least a side surface of the fourth heating unit HU4 to a side surface of the fifth heating unit HU5 may be restricted through the fourth barrier 654. For example, as illustrated in FIG. 22, the fourth barrier 654 may be connected to side surfaces of an inner surface of the body part 620 facing each other in the thickness direction of the fourth heating unit HU4. Among surfaces of the fourth barrier 654, surfaces respectively facing the fourth heating unit HU4 and the fifth heating unit HU5 may have a curved shape, and as a specific example, may have curved surfaces corresponding to the fourth heating unit HU4 and the fifth heating unit HU5, respectively.

The fifth barrier 655 may be arranged between the fifth heating unit HU5 and the sixth heating unit HU6. A space where the fifth heating unit HU5 is arranged and a space where the sixth heating unit HU6 is arranged may be separated from each other in at least one region through the fifth barrier 655.

In addition, the introduced fluid WT may sequentially flow from a space adjacent to the fifth heating unit HU5 to a space adjacent to the sixth heating unit HU6 through the fifth barrier 655. Through this, the fluid WT inside the body part 620 may be efficiently heated through the fifth heating unit HU5 and the sixth heating unit HU6.

The fifth barrier 655 may have a shape extending in the lengthwise direction of the fifth heating unit HU5 and the sixth heating unit HU6 and may have the fifth passage TH5 spaced apart from the inner surface of the body part 620 in at least one region in the lengthwise direction, and the fifth passage TH5 may serve as a passage for the flow of the fluid WT.

The fifth passage TH5 may not overlap the fourth passage TH4, and for example, the fifth passage TH5 and the fourth passage TH4 may be formed to face opposite ends among both ends of the heating unit part HU.

In an optional embodiment, the fifth passage TH5 may overlap the third passage TH3 or the first passage TH1.

In addition, as illustrated in FIG. 25, the fifth passage TH5 may include a curved hole, as a specific example, an opening similar to a circle.

Also, although not illustrated, the shape of the fifth passage TH5 may include a polygonal opening.

In addition, in an optional embodiment, it may include a groove further deep into the bottom to facilitate the flow of the fluid WT in the fifth passage TH5.

The structure of FIG. 25 may be selectively applied to the first to fourth passages TH1 to TH4.

In an optional embodiment, the flow of the fluid WT from at least a side surface of the fifth heating unit HU5 to a side surface of the sixth heating unit HU6 may be restricted through the fifth barrier 655. For example, as illustrated in FIG. 22, the fifth barrier 655 may be connected to side surfaces of an inner surface of the body part 620 facing each other in the thickness direction of the fifth heating unit HU5. Among surfaces of the fifth barrier 655, surfaces respectively facing the fifth heating unit HU5 and the sixth heating unit HU6 may have a curved shape, and as a specific example, may have curved surfaces corresponding to the fifth heating unit HU5 and the sixth heating unit HU6, respectively.

Passage parts, for example, the first passage TH1, the second passage TH2, and the third passage TH3, may have widths to allow the fluid WT to pass through them, and in an optional embodiment, the widths may be equal to each other.

The body part 620 may have various shapes, and may include at least an inlet 621 for inflowing the fluid WT and an outlet 622 for discharging the fluid WT.

The inlet 621 and the outlet 622 may be arranged on both sides of the restriction region BTA. Through this, the fluid WT introduced into the inlet 621 may pass through one side of the restriction region BTA, then be heated while passing through a region adjacent to the heating unit part HU, and then discharged through the outlet 622.

In an optional embodiment, the inlet 621 and the outlet 622 may be arranged on both sides with the heating unit part HU therebetween. Through this, heating efficiency and heating uniformity over the entire region of the fluid WT may be improved.

The body part 620 may be formed of various materials. For example, the body part 620 may be formed of a durable and lightweight insulating material. In an optional embodiment, the body part 620 may be formed of a plastic material including various types of resins. In another optional embodiment, the body part 620 may include an inorganic material such as ceramic.

In addition, in another optional embodiment, the body part 620 may be formed of a metal material.

As another example, the body part 620 may include a Teflon resin that is a fluorine resin.

In an optional embodiment, from among surfaces of the body part 620, at least an inner surface of the body part 620 adjacent to the fluid WT may include an insulating layer, may include, for example, an inorganic layer, and may contain an inorganic material including ceramic.

In addition, as another example, an insulating layer containing an organic material may be formed on an inner surface of the body part 620 adjacent to the fluid WT.

Through this, it is possible to improve safety in use of the electrode-based heating device 600 by improving mutual insulation characteristics with the heating unit part HU.

The heating unit part HU may include at least a plurality of heating units HU1, HU2, HU3, HU4, HU5, and HU6, for example, the first heating unit HU1, the second heating unit HU2, the third heating unit HU3, the fourth heating unit HU4, the fifth heating unit HU5, and the sixth heating unit HU6.

In an optional embodiment, the first heating unit HU1, the second heating unit HU2, the third heating unit HU3, the fourth heating unit HU4, the fifth heating unit HU5, and the sixth heating unit HU6 may be arranged to be spaced apart from each other.

Referring to FIG. 22, the electrolyzed water IW may be arranged inside the first heating unit HU1. The electrolyzed water IW may be arranged to be distinguished from the external fluid WT.

For example, the electrolyzed water IW may be arranged inside a heat dissipation part 630 of the first heating unit HU1, such that the electrolyzed water IW and the fluid WT may be distinguished from each other through the heat dissipation part 630.

The first heating unit HU1 may include an electrode part 660 having one or more electrodes.

At least one region of the electrode part 660 may be arranged inside the first heating unit HU1, for example, inside the heat dissipation part 630.

In addition, the electrode part 660 may be arranged to overlap the electrolyzed water IW to heat the electrolyzed water IW in an inner region of the heat dissipation part 630.

In addition, the electrode part 660 may overlap the fluid WT arranged inside the body part 620 in one direction.

The electrode part 660 may include a plurality of electrodes.

For example, the electrode part 660 may include a first electrode 661 and a second electrode 662.

In an optional embodiment, the first electrode 661 and the second electrode 662 may include a first terminal part 661T and a second terminal part 662T, respectively, and a power source may be connected through the first terminal part 661T and the second terminal part 662T.

In an optional embodiment, as illustrated in the second heating unit HU2, a protection part 660C may be formed on each of the first terminal part 661T and the second terminal part 662T.

The heat dissipation part 630 of the first heating unit HU1 may be arranged to distinguish between the electrolyzed water IW and the fluid WT. For example, the heat dissipation part 630 may be located between the electrolyzed water IW and the fluid WT. In addition, the heat dissipation part 630 may be formed to be spaced apart from the electrode part 660.

In addition, the structure of FIG. 2 described above may be selectively applied.

In addition, various configurations of the heat dissipation part described in the above embodiments may be selectively applied.

The second to sixth heating units HU2, HU3, HU4, HU5, and HU6 may have the same configuration as that of the first heating unit HU1 and may be modified and applied within a similar range as needed, and thus, a detailed description thereof will be omitted.

Referring to FIGS. 22 to 24, a space in which the fluid WT flows in the body part 620 or spaces in which the first to sixth heating units HU1, HU2, HU3, HU4, HU5, and HU6 of the heating unit part HU are arranged may include a curved surface.

For example, the first heating path LA1, the second heating path LA2, the third heating path LA3, the fourth heating path LA4, the fifth heating path LA5, and the sixth heating path LA6. may include a curved surface, and as a specific example, may include a curved surface surrounding the first to sixth heating units HU1, HU2, HU3, HU4, HU5, and HU6.

Through this, in the first heating path LA1, the second heating path LA2, the third heating path LA3, the fourth heating path LA4, the fifth heating path LA5, and the sixth heating path LA6, the fluid WT may be heated adjacent to the first to sixth heating units HU1, HU2, HU3, HU4, HU5, and HU6 while passing around the first to sixth heating units HU1, HU2, HU3, HU4, HU5, and HU6, and may sequentially pass through the first to sixth heating units HU1, HU2, HU3, HU4, HU5, and HU6.

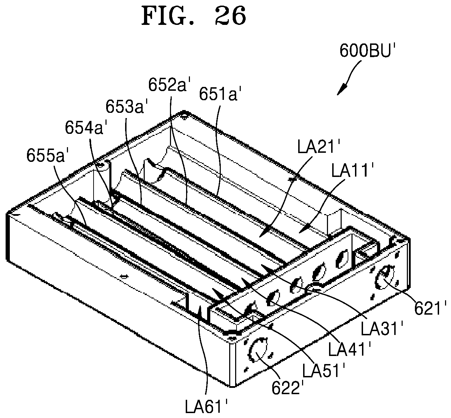

FIGS. 26 to 28 are exemplary diagrams for describing a configuration of an electrode-based heating device, according to another embodiment of the present disclosure.

For convenience of description, the heating unit is omitted in FIGS. 26 to 28.

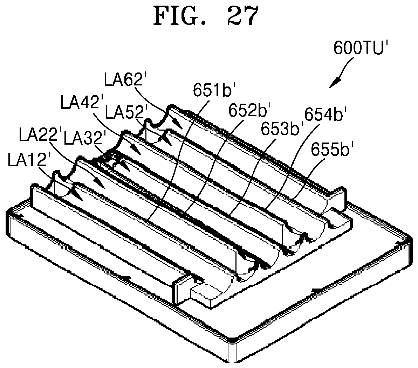

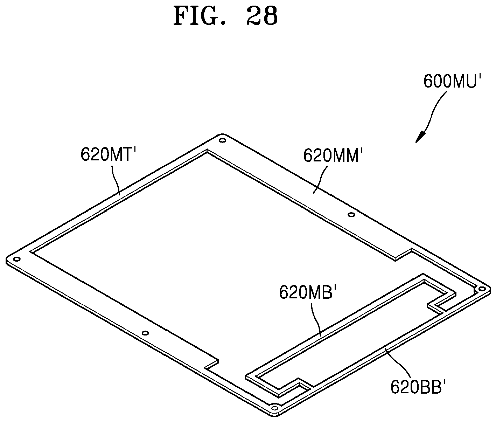

FIG. 26 illustrates a bottom module 600BU', FIG. 27 illustrates a top module 600TU', and FIG. 28 illustrates an insertion part 600MU'.

The electrode-based heating device may be formed by combining the bottom module 600BU' with the top module 600TU', and in an optional embodiment, the insertion part 600MU' may be arranged between the bottom module 600BU' and the top module 600TU'.

A first barrier lower side 651 a' to a fifth barrier lower side 655a' of FIG. 26 may be connected to a first barrier upper side 651b' to a fifth barrier upper side 655b' of FIG. 27 to form first to fifth barriers, respectively. For example, the first to fifth barriers 651 to 655 of the above-described embodiment may be formed.

In addition, a first heating path lower side LA11' to a sixth heating path lower side LA61' of FIG. 26 may be connected to a first heating path upper side LA12' to a sixth heating path lower side LA62' of FIG 27 to form first to sixth heating paths, respectively. For example, the first to sixth heating paths LA1 to LA6 of the above-described embodiment may be formed.

In an optional embodiment, an inlet 621' and an outlet 622' may be formed on the bottom module 600BU' or the top module 600TU', for example, on the bottom module 600BU'.

The coupling force between the bottom module 600BU' and the top module 600TU' may be improved through the insertion part 600MU', and, for example, leakage of a fluid may be reduced or prevented.

For example, the insertion part 600MU' may have elasticity and may have waterproof characteristics.

In an optional embodiment, the insertion part 600MU' may include a side corresponding part 620MM', a bottom corresponding part 620MB', and a lower corresponding part 620BB' to correspond to the body part, and each of the side corresponding part 620MM', the bottom corresponding part 620MB', and the lower corresponding part 620BB' may be connected to the bottom module 600BU' and the top module 600TU'.

The electrode-based heating device of the present embodiment may include a heating unit having a fluid arranged inside the body part and including a plurality of heating units arranged such that at least one region thereof overlaps the fluid.

The plurality of heating units may be arranged to be spaced apart from each other and the fluid overlaps outer surfaces of the plurality of heating units such that the fluid may be easily heated by the heating units. In addition, the fluid may be arranged between the plurality of heating units, such that the heating efficiency of the fluid may be improved.

In addition, a barrier part may be formed between the plurality of heating units, and a passage part may be formed in one region of the barrier part to allow the fluid to pass therethrough.

For example, the barrier part may include a plurality of barriers, and passage parts of the barriers may be formed to alternate with each other.

Through this structure, the barrier part may allow the fluid to easily move in spaces adjacent to the respective heating units arranged to be distinguished from each other.

In addition, through a specific configuration of the passage part, the fluid may be sequentially heated by the plurality of heating units of the heating unit part while flowing in one direction. For example, the fluid may be heated while flowing along the sequentially arranged heating units, and the flow direction of the fluid may be reversed whenever the fluid moves to an adjacent heating unit.

Through this, it is possible to improve heating efficiency of the fluid by generating a smooth flow of the fluid along each heating unit.

Meanwhile, an inner surface of a region through which the fluid flows may include a curved surface, and as a specific example, may have a shape surrounding the heat dissipation part. Through this, when the fluid passes through a heating path, the fluid flows while effectively contacting the heat dissipation part of each heating unit, such that the fluid may be easily heated, and thus, the thermal efficiency of the electrode-based heating device may be improved to increase a fluid heating rate.

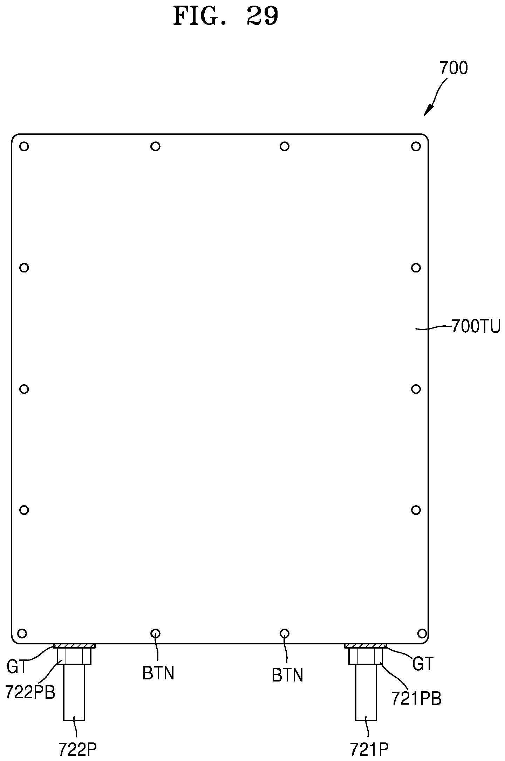

FIG. 29 is a schematic plan view illustrating an electrode-based heating device according to another embodiment of the present disclosure.

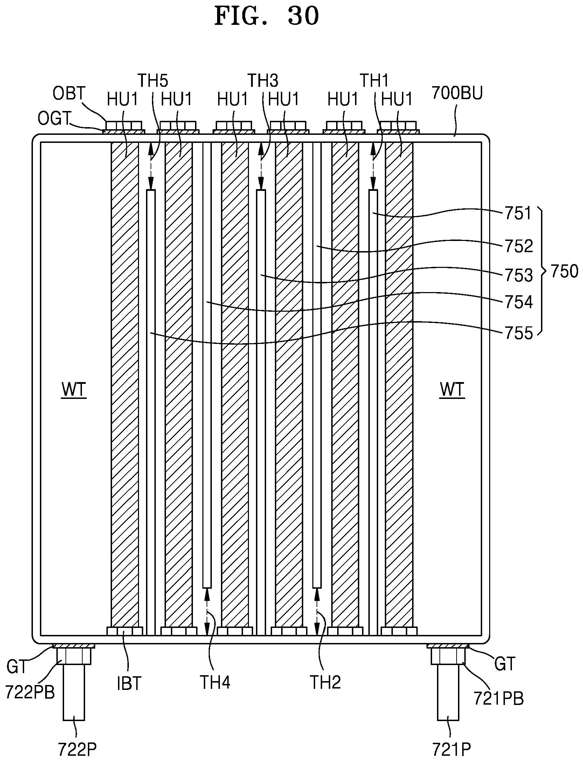

FIG. 30 is a schematic plan view illustrating a state in which a top module 700TU of the electrode-based heating device of FIG. 29 is removed.

An electrode-based heating device 600 of the present embodiment may include the body part 620 and the heating unit part HU.

An electrode-based heating device 700 of the present embodiment may have a form in which the top module 700TU is coupled to a bottom module 700BU, and the top module 700TU and the bottom module 700BU may be coupled to each other through, for example, a fastening member BTN, may be separated from each other when necessary, and as a specific example, may be separated from each other after removing the fluid WT.

An inlet member 721P through which the fluid WT flows into a body part 720 may be formed to protrude from an outer surface of the body part 720.

In an optional embodiment, the inlet member 721P may be formed to be able to be coupled to and separated from the body part 720, and for convenience of such coupling and separation processes, the inlet member 721P may have a coupling part 721PB formed thicker than an adjacent region and adjacent to the body part 720, and for example, an insertion member GT may be arranged between the coupling part 721PB and the body part 720 to reduce or prevent leakage or outflow of the fluid WT.

An outlet member 722P through which the fluid WT is discharged to the outside of the body part 720 may be formed to protrude from an outer surface of the body part 720.

In an optional embodiment, the outlet member 722P may be formed to be able to be coupled to and separated from the body part 720, and for convenience of such coupling and separation processes, the outlet member 722P may have a coupling part 722PB formed thicker than an adjacent region and adjacent to the body part 720, and for example, an insertion member GT may be arranged between the coupling part 722PB and the body part 720 to reduce or prevent leakage or outflow of the fluid WT.

A barrier part 750 may be arranged to distinguish between a plurality of heating units HU1, HU2, HU3, HU4, HU5, and HU6.

For example, the barrier part 750 may include a first barrier 751, a second barrier 752, a third barrier 753, a fourth barrier 754, and a fifth barrier 755, and as a specific example, they may be sequentially arranged to be spaced apart from each other.

In addition, the first passage TH1 and the second passage TH2, the third passage TH3, the fourth passage TH4, the fifth passage TH5, and a sixth passage TH6 may be formed in the first barrier 751, the second barrier 752, the third barrier 753, the fourth barrier 754, and the fifth barrier 755, respectively.

Details of the barrier part 750 may be the same as or similar to those of the barrier part 650 of the above-described embodiment. In addition, various configurations of the above-described embodiments may be selectively applied, and thus, detailed descriptions will be omitted.

The heating unit part HU may include at least a plurality of heating units HU1, HU2, HU3, HU4, HU5, and HU6, for example, the first heating unit HU1, the second heating unit HU2, the third heating unit HU3, the fourth heating unit HU4, the fifth heating unit HU5, and the sixth heating unit HU6.

At least one of the first heating unit HU1, the second heating unit HU2, the third heating unit HU3, the fourth heating unit HU4, the fifth heating unit HU5, and the sixth heating unit HU6 may have an elongated shape so as to be connected to one side of the body part 720 and the opposite side.

In an optional embodiment, at least one of the first heating unit HU1, the second heating unit HU2, the third heating unit HU3, the fourth heating unit HU4, the fifth heating unit HU5, and the sixth heating unit HU6 may be connected to an inner surface of the body part 720, for example, an inner surface in a direction in which the fluid WT is introduced or discharged, and for example, may be coupled through an inner coupling region IBT. Electrolyzed water in the heating unit and the fluid WT may be isolated through the inner coupling region IBT.

In an optional embodiment, at least one of the first heating unit HU1, the second heating unit HU2, the third heating unit HU3, the fourth heating unit HU4, the fifth heating unit HU5, and the sixth heating unit HU6 may be connected to an outer surface of the body part 720, for example, an outer surface in a direction in which the fluid WT is introduced or discharged, and for example, may be coupled through an outer coupling region OBT. The electrolyzed water in the heating unit and the fluid WT may be isolated through the outer coupling region OBT. As a further example, a terminal area of the electrode part in the heating unit may be connected to the outer coupling region OBT, or may be connected to the outside or a terminal connection part of a power supply unit through the outer coupling region OBT.

In an optional embodiment, an insertion member OGT may be arranged for the strength of the coupling and to reduce or prevent leakage of the fluid WT.

The first heating unit HU1, the second heating unit HU2, the third heating unit HU3, the fourth heating unit HU4, the fifth heating unit HU5, and the sixth heating unit HU6 are the same as or may be selectively applied with the descriptions of the above embodiments, and thus, a detailed description thereof will be omitted.

The electrode-based heating device of the present embodiment may have an inlet member and an outlet member having an elongated shape so as to easily perform introduction of a fluid into the body part or discharge of the fluid out of the body part.

In addition, a plurality of heating units may be elongated to be connected to opposite sides of an inner surface of the body part facing each other.

Through this, it is possible to effectively heat a fluid in the heating path by increasing the contact area between the fluid inside the body part and the heating unit, and reduce or prevent the fluid from being non-uniformly heated or abnormally cooled. As a result, it is possible to easily implement an electrode-based heating device with improved thermal efficiency.

Although the present disclosure has been described with reference to the embodiment shown in the drawings, which is merely exemplary, it will be understood by those skilled in the art that various modifications and equivalent other embodiments are possible therefrom. Accordingly, the true technical protection scope of the present disclosure should be determined by the technical spirit of the appended claims.

The particular implementations shown and described herein are illustrative examples of the embodiments and are not intended to otherwise limit the scope of the embodiments in any way. In addition, no item or component is essential to the practice of the present disclosure unless the item or component is specifically described as being "essential" or "critical".

The term "the" and other demonstratives similar thereto in the descriptions of embodiments (especially in the following claims) should be understood to include a singular form and plural forms. Further, recitation of ranges of values herein are merely intended to serve as a shorthand method of referring individually to each separate value falling within the range, unless otherwise indicated herein, and each separate value is incorporated into the specification as if it were individually recited herein. Finally, operations of all methods described herein can be performed in any suitable order unless otherwise indicated herein or otherwise clearly contradicted by context. The embodiments are not limited to the described order of the operations. The use of any and all examples, or exemplary terms (e.g., "such as") provided herein, is intended merely to better illuminate the present disclosure and does not pose a limitation on the scope of the present disclosure unless otherwise claimed. In addition, those of skill in the art will understand that various modifications, combinations, and adaptations may be configured according to design conditions and factors without departing from the following claims and equivalents thereof.

### EXPLANATION OF REFERENCE NUMERALS DESIGNATING THE MAJOR ELEMENTS OF THE DRAWINGS

100, 200, 300, 400, 500, 600, 700: electrode-based heating devices
HU: heating unit part
120, 220, 320, 420, 520, 620, 720: body parts

## Claims

1. An electrode-based heating device for heating a fluid, the electrode-based heating device comprising a body part and a heating unit part,
wherein the body part is formed such that the fluid is arranged inside the body part,
the heating unit part comprises a plurality of heating units spaced apart from each other,
at least one heating unit of the plurality of heating units is formed such that electrolyzed water is arranged inside the at least one heating unit, and comprises an electrode part formed to heat the electrolyzed water, and
the fluid and the electrolyzed water are arranged to overlap each other.

2. The electrode-based heating device of claim 1, wherein the plurality of heating units of the heating unit part are arranged to be spaced apart from each other in a direction crossing a lengthwise direction of the plurality of heating units.

3. The electrode-based heating device of claim 1, further comprising an inlet through which the fluid is introduced into the body part, and an outlet through which the fluid is discharged to an outside of the body part.

4. The electrode-based heating device of claim 1, wherein the fluid is arranged to overlap an electrode part of each of the plurality of heating units of the heating unit part.
